(19) Europäisches Patentamt
European Patent Office
Office européen des brevets

(11) **EP 1 787 444 B1**

(12) **EUROPEAN PATENT SPECIFICATION**

(45) Date of publication and mention of the grant of the patent:
**10.10.2007 Bulletin 2007/41**

(21) Application number: **05778527.1**

(22) Date of filing: **01.09.2005**

(51) Int Cl.:
*H04L 27/00* (2006.01)      *H04B 1/40* (2006.01)

(86) International application number:
**PCT/GB2005/003371**

(87) International publication number:
**WO 2006/024849 (09.03.2006 Gazette 2006/10)**

(54) **Synchronisation circuit for synchronising time with a received radio controlled clock signal and a corresponding clock**

Synchronisierungsschaltung zur Zeitsynchronization mit einem empfangenen Funkuhrsignal und eine entsprechende Uhr

Circuit de synchronisation pour synchroniser le temp au signal de montre radio reçu et une montre correspondante

(84) Designated Contracting States:
**AT BE BG CH CY CZ DE DK EE ES FI FR GB GR HU IE IS IT LI LT LU LV MC NL PL PT RO SE SI SK TR**

(30) Priority: **01.09.2004 GB 0419388**

(43) Date of publication of application:
**23.05.2007 Bulletin 2007/21**

(73) Proprietor: **Leung, Tak Ming
Hong Kong (CN)**

(72) Inventor: **LEUNG, Tak Ming c/o Emily Yip & Co Hong Kong (HK)**

(74) Representative: **Browne, Robin Forsythe et al
Leaman Browne
5 South Parade
Leeds, LS1 5QX (GB)**

(56) References cited:
**EP-A- 0 948 172        EP-A- 0 987 824
EP-A- 1 426 839        EP-A- 1 698 950
WO-A-20/04023223        US-A- 5 271 036**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

The present application relates to a synchronisation circuit for synchronising time with a received radio controlled clock signal. In particular, it relates to a synchronisation circuit in which a sampled RF signal is analysed to determine its modulation format.

An example of the present invention relates to a new method for identifying and decoding various types of RF signals and biomedical signals. In particular, the present invention determines different modulation formats (for example CW, Frequency Shift Keying (FSK), Amplitude Modulation (AM), Phase Shift Keying (PSK), CW+FSK, CW+PSK, and single-sideband AM, including Lower sideband AM-LSB and upper sideband AM-USB) of a received signal and the information it contains (eg date and time information, heart-rate).

Another example of the present invention relates to a standardized decoder for identifying and decoding trend data of incoming signals, ie a Universal Standard Decoder.

A wide variety of digital data can be transmitted and received using Radio Frequency (RF) waves. To allow accurate transmission and reception of digital data using RF signals, a number of data modulation methods have been developed. These include general modulation methods such as Phase Shift Keying (PSK) and Pulse Width Modulation (PWM). In order to decode a digital signal transmitted over an RF band, it is necessary to determine which modulation method has been used.

It is often also necessary to determine which particular variant of the modulation method is used. For example, it may be known that the data is transmitted using PWM, but the data format such as the pulse width used to signify a particular binary value, and the way in which the start and end of data frames is marked will vary.

Establishing the correct modulation method and variant can take a considerable time. One known procedure is to use a linear, or sequential, search. In such a procedure a received signal is attempted to be decoded using a first modulation method and variant. If that fails, a second modulation format and/or variant is tried, and so on until the correct format is identified.

Thus, it is the object of the present invention to improve the identification of the RF modulation method and/or variant used in a received RF signal.

Known methods of processing RF signals in a single chip (4 bit to 8 bit) configuration environment include the following:-

1. Using an RF signal processor with functional units which are responsible for scanning RF signals of different modulation format (CW+FSK, CW, AM, FSK, CW+PSK, AM (LSB), AM (USB)) and different RCC standards (BCF, DCF, MSF, JJY, JJY60, WWVB and heart rate). The functional units are combined and placed on a new chip. However, this has the disadvantage that there is no communication between the functional units. Work is organized by a controller or microcontroller. Scanning is done by the functional units one by one in turn until all are being scanned (ie linear scan or sequential search is used).

2. Using a Phase Lock Loop in order to search for a signal, the method comprises:-

      a) Linear Scan
      b) Memory Scan
      c) Pre-set Scan

The scanning time of this method is relatively long. Furthermore, the accuracy and the stability of jitter are not suitable for use with RCC applications.

The above methodology and model of processing are set to work in a dedicated period of time, at a dedicated frequency, channel or modulation format to process and calculate a single type of data or accumulated data, such as envelope, amplitude of power, power factor, phase, phase angle and weight factor.

Conventional methods only rely on calculation of the ratio / probability of the matched signal characteristics, ie by sampling incoming signals, comparing the same with the reference values and thus determining standards of the same when enough matched signal characteristics are accumulated. Since a close to 100% accuracy based on the continuous sampling of the correct incoming signals is not required, this will give rise to a high rate of data error.

In the circumstances, these methods cannot be used in applications requiring high accuracy. Such a method is disclosed in EP 1 426 839 A1.

Therefore, it is an object of the present invention to give identification results and information output with high accuracy.

Accordingly, the present invention provides a synchronisation circuit which analyses a portion of a received RF signal which has been sampled and stored for a predetermined time interval. From this analysis certain characteristic values are determined. Using these determined characteristics, together with stored information on the characteristics of known signal types, an estimate of the likely modulation format is generated. The estimate may also predict the later values of the signal.

A first aspect of the present invention is provided in the independent claim 1.

There, modulation format is used to refer to both general modulation methods such as PWM, and also variants of a particular method. By analysing a characteristic of the sampled input data, the modulation format can be identified without requiring a sequential search until a match is found. In effect all of the modulation formats are being searched concurrently. This reduces the time required to identify the modulation format.

An accumulation is also used to refer to running total or sum which is updated with each repetition. This allows the method to take the history of the signal into account and during analysis.

In one embodiment, the RF signal has a bandwidth chosen to include the transmission frequency of all the plurality of modulation formats. Thus, all the signals can be identified without requiring an alteration of the reception frequency.

In another embodiment, the plurality of modulation formats includes at least two modulation formats which have different transmission frequencies.

A second aspect of the present invention is provided in the independent claim 3.

Further embodiment of the present invention is provided in the dependent claim 2.

The synchronisation circuit of the invention can be applied to the identification of time data broadcast over an RF frequency. A number of standards exist for the transmission of accurate time data using RF signals. Collectively, the standards are known as atomic clock or Radio Controlled Clock (RCC) standards. The RCC standards all share certain signal characteristics, but differ in others. One common characteristic is that each standard transmits one data bit each second using pulse width modulation, and the data is transmitted in frames of 60 bits (or a period of 60 seconds). However, the transmission frequency, the width of the pulses and the order in which data is transmitted varies according to the particular standard which is set by each country. Table 1 below gives the name of the standards used in some countries, together with the transmission frequency.

Table 1 - RCC Standard band names and frequency in some example countries

| Country | Band Name | Frequency (kHz) |
|---------|-----------|-----------------|
| Germany | DCF | 77.5 |
| Japan | JJY | 40 or 60 |
| UK | MSF | 60 |
| USA | WWVB | 60 |

Japan broadcasts its time signal data at two frequencies: 40 kHz and 60 kHz. However the data carried at each frequency is identical, so in practice it does not matter which frequency is chosen if the chosen frequency is decoded correctly.

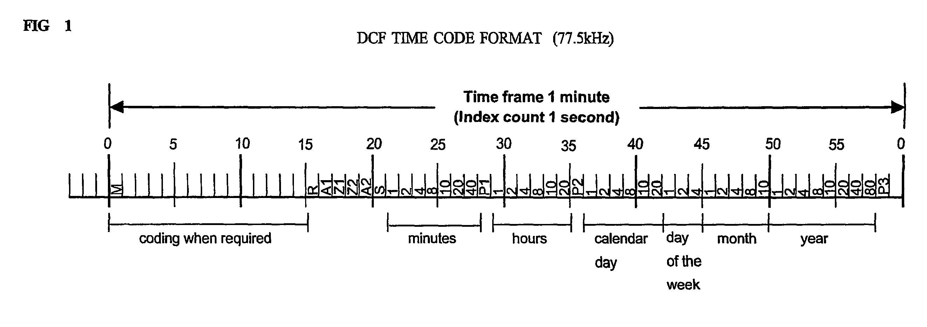

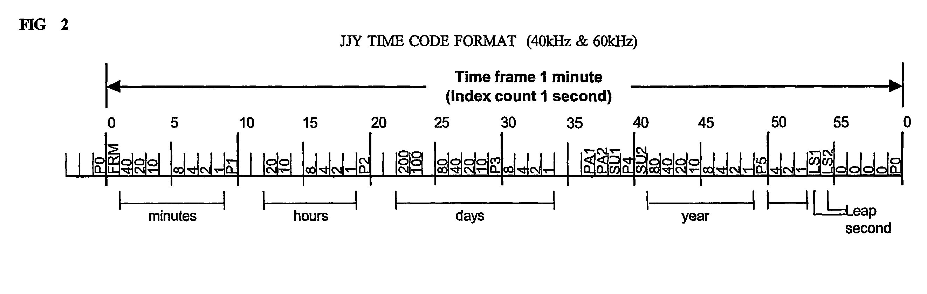

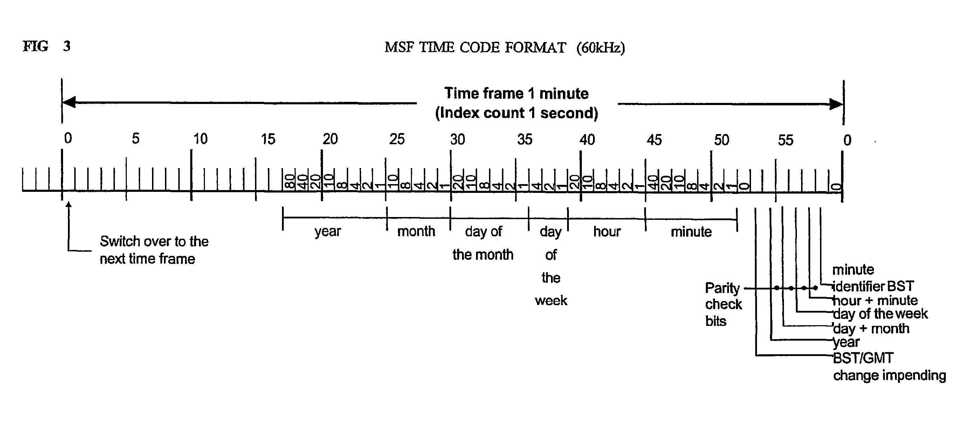

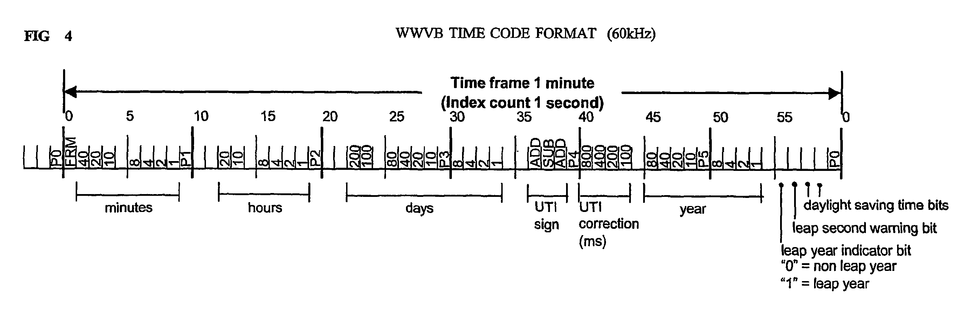

Figures 1 to 4 show the format of data transmitted by the DCF, JJY, MSF and WWVB standards, respectively. Each format differs depending on the data carried by the 60 bits during a time span of 1 minute is allocated and used. The width, or duration, of high and low pulses used to signify data bits, markers within the data, and the start and end of the data frame also varies according to the individual country standards. The pulse widths, each in a one second time segment of the various standards used in the example countries are given in table 2 below.

Table 2 - RCC standard pulse durations used in some example countries

| Band Name | "Marker" Pulse Duration (High / Low)/ms | "Start" Pulse Duration (High / Low)/ms | "End" Pulse Duration (High / Low)/ms | Binary "1" Pulse Duration (High / Low)/ms | Binary "0" Pulse Duration (High / Low)/ms |
|-----------|------------------|------------------|------------------|------------------|------------------|
| DCF | Not Used | 200/800 | Blank | 200/800 | 100/900 |
| JJY | 800/200 | 800/200 | 800/200 | 500/500 | 200 / 800 |
| MSF | Not Used | 500/500 | 100/900 | 200/800 | 100/900 |
| WWVB | 800 / 200 | 800/200 | 800/200 | 500/500 | 200/800 |

It is desirable to produce a device which can decode a time signal in a variety of formats. Such a device would not be limited to operate in a particular country and a single device could then be sold for use in several countries, rather than requiring a specialised device for sale in each country. It is also useful for a mobile device, which may travel between countries, to be able to operate in different countries.

In a conventional system, a device can be manufactured to operate with the time standard of several countries by utilising a linear or sequential search as discussed above. In such a device the entire data period (i.e. a 60 second period containing 60 bits of data) of an incoming signal is examined to see if it has the characteristics of a first signal (for example DCF). If no match is established, the system then examines the incoming signal to see if has the characteristics of a second signal (for example JJY), and so on. Such a search can take several minutes to carry out, because the RCC standards transmit only one bit of the signal each second, and a significantly longer period is required to establish whether a signal is present and to synchronize a decoder with it.

The device and apparatus of the present invention performs a fully automatic scan of all kinds of signals by changing frequency, selecting channel and modulation format in order to identify the incoming signal based on its characteristics.

When the automatic scan initiates, the Universal Standard Decoder of the present invention can immediately extract from the incoming signal (instant signal) the characteristics and variation of those characteristics, ie the data regarding variation of the characteristics from $t_{start}$ to $t_{end}$, of all signals by real-time parallel processing, and at the same time process the accumulation of the variation of characteristics from $t_{start}$ to $t_{end}$:

$$\sum_{n=start}^{n=end} Characteristics\,Variation$$

Ie, instantly recording the data of the instant characteristics and variation of these characteristics.

Identification and decoding of the instant characteristics data and variation of characteristics is performed by comparing these values against a standardized table / database in order to identify the most probable modulation format. The decoder may better predict the next value of the received signal based on the results generated.

The results of signal identification and decoding to predict the most probable value of the next incoming signal depend on at least part of the characteristics of the already received signals.

The present invention, in particular, relates to processing, recognizing, identifying and decoding RCC signals in CW+FSK, CW, AM, FSK, CW+PSK, AM(LSB), AM(USB) modulation formats and heart rate in the biomedical signals.

The technology and method can also be applied to all kinds of RF signals, modulation formats, biomedical signals and other aspects.

Embodiments of the invention will now be described by way of example only with reference to the accompanying drawings in which:

Figure 5 depicts a block diagram of an apparatus according to an embodiment of the invention;
Figure 6 is a flow chart of an identification method used by the embodiment of the invention;
Figure 7 is a flow chart of the operation method of a universal decoder used by the first embodiment of the invention;
Figure 8 is a flow chart of an identification method used by an example of the invention;
Figure 9 depicts a diagrammatic representation of a parallel crystal filter;
Figure 10 depicts a diagrammatic representation of a serial crystal filter;
Figure 11 depicts a diagrammatic representation of a phase locked loop crystal filter;
Figure 12 depicts a block diagram of a demodulator and decoder according to a further example of the present invention;
Figure 13 depicts a schematic diagram of a single crystal filter;
Figure 14 depicts the waveform of normal output signals after being filtered by the filter in Fig 13;
Figure 15 depicts the waveform of erroneous output signals after being filtered by the filter in Fig 13;
Figure 16 is a diagrammatic representation of an antenna and variable capacitor;
Figure 17 depicts possible input signals to the MCU of the further example;
Figure 18 depicts characteristics of a heart rate signal;
Figure 19 depicts characteristics of an RCC signal;
Figure 20 depicts continuous characteristics of RCC and Heart Rate signals;
Figure 21 depicts phase measurement of positive and negative phases;
Figure 22 illustrates the projections of points in time according to the present invention;
Figure 23 illustrates positive and negative phase projections in time according to the present invention;
Figure 24 illustrates a preparation stage of decoding;
Figure 25 illustrates timings for synchronisation and decoding; and
Figure 26 illustrates bit locations within a 60 second RCC signal cycle.

**EP 1 787 444 B1**

According to an embodiment of the present invention, a predictive analysis of a received signal is carried out to determine whether a signal conforming to an RCC standard is present and if so, which standard it conforms to. If a signal conforming to an RCC standard is identified, a decoder is also synchronised to the signal.

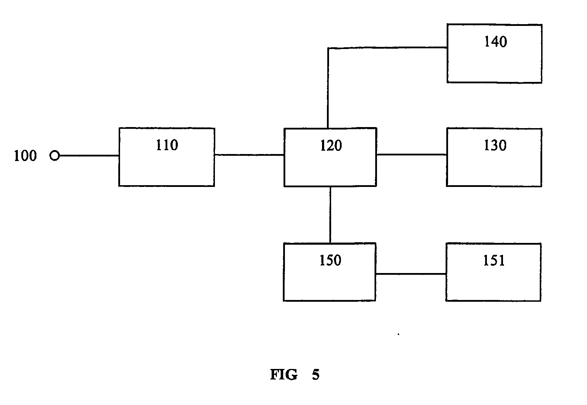

Figure 5 depicts a schematic diagram of an apparatus according to a first embodiment of the present invention. An input terminal 100 receives an RF signal from an aerial (not illustrated). The bandwidth of the RF signal is sufficient to include the frequency of all the RCC standards which can be decoded by the apparatus, in this embodiment the bandwidth is 40 kHz to 100 kHz.

The RF signal input to terminal 100 is supplied to a Analog-to-Digital Converter (ADC) or sampler 110. The ADC 110 digitises the analog RF signal and outputs a series of consecutive signal values to a microcontroller 120. The sampling frequency and resolution of the ADC 110 is chosen to ensure that sufficient detail of the RF signal is captured that it can be recognised and subsequently decoded. In this embodiment, given that the period of one bit transmitted according to an RCC standard is 1 second, a sampling frequency of 60 Hz is used. The resolution of the sampler 110 is 8 bits. Other resolutions such as 10-bit or 12-bit can also be used, however in general the lower the resolution the less expensive the sampler is to manufacture.

The microcontroller 120 receives the sampled signal values from the ADC 110. These are then stored in a dynamic or volatile memory 140. A non-volatile memory 130, such as a read-only memory or a flash memory, is also connected to the microcontroller 120. The non-volatile memory 130 stores the execution instructions for the microcontroller 120 and also stores a parameter table holding data on the characteristics of the different RCC standards which can be decoded, together with a look-up table used to decode them. (The characteristics stored and the look-up table will be described in more detail later).

The microcontroller 120 can begin processing the stored data to identify an RCC signal a soon as the first sample has been stored. As was explained above, it is possible to determine the RCC format from the pulse widths used, the order they are received in and whether marker or start/stop pulses are present.

In general terms, the microcontroller 120 is operative to analyse the received samples to determine whether a signal is present, and if so which RCC format is used. The analysis is carried out by examining the characteristics of the signal and comparisons with characteristics which are stored in the parameter table in the non-volatile memory 130. Because there are similarities between the modulation formats, for example all formats use a pulse width of 200ms for some purpose, it is necessary to examine further periods of the signal to ensure the choice is correct. Therefore the microcontroller 120 continues to receive and store samples from the ADC 110 and carries out further comparisons, until a match is determined.

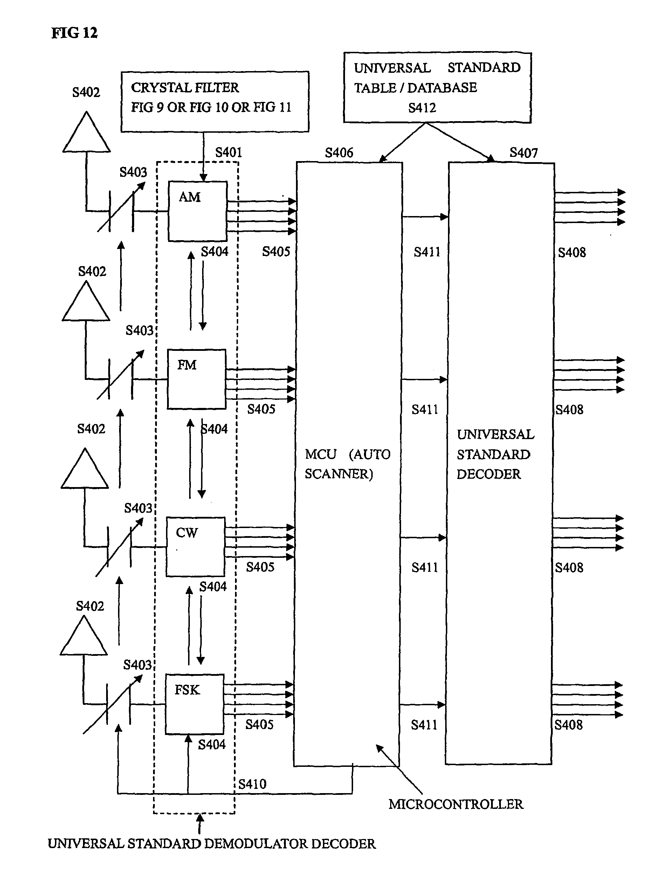

An example of the present invention is depicted in Figure 12. This embodiment supports single antenna-single output or multiple antenna-multiple output.

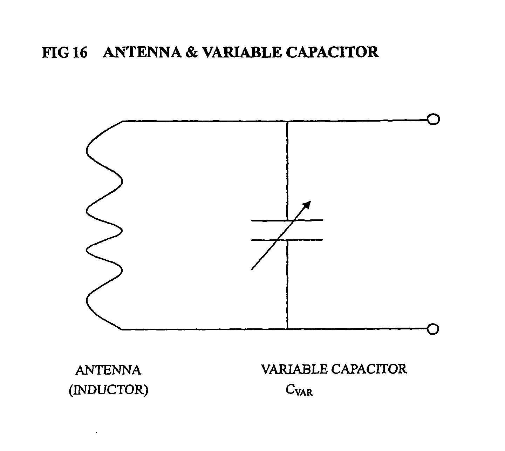

The structure of antenna is illustrated by S402, S403 in Fig 12. The antenna is a resonant circuit comprising an inductor (ie antenna S402) and a variable capacitor S403 as shown in Fig 16.

The formula of calculating the variable capacitance is as follows:-

$$C_{var} = 1 / (2\pi f_{var})^2 L \qquad (1)$$

The resonant circuit can receive signals of different frequencies $f_{var}$ by using different values of variable capacitance $C_{var}$.

S409 and S410 in Fig 12 are signal lines as well as controllers of the variable capacitance, which alter the values of the variable capacitance in order to search for corresponding frequencies. They also act as a feedback controller / signal line of S406 & S407 in the system.

S409 & S410 change the values of the variable capacitance based on the characteristics, continuous characteristics and trend parameter data provided by S406 & S407. In accordance with the trend parameters obtained, the scanning frequency will change accordingly. In such cases, S406 & S407 will feed S409 & 5410 with the relevant parameters via S403, S403 will then alter the scanning frequency $f_{var}$ accordingly. With reference to formula (1), the variable capacitance $C_{var}$ will be changed in order to perform scanning at a new frequency (new $f_{var}$).

An important point to note is that S406 & S407 adopts a new method and parameter to improve conventional scanning methods which will be described in more detail below.

S404 are demodulators which demodulate RF signals of different modulation formats (CW+FSK, CW, AM, FSK, CW+PSK, AM (LSB), AM (USB)). These signals are converted to digital signals by the Analog-to-Digital Converter (ADC).

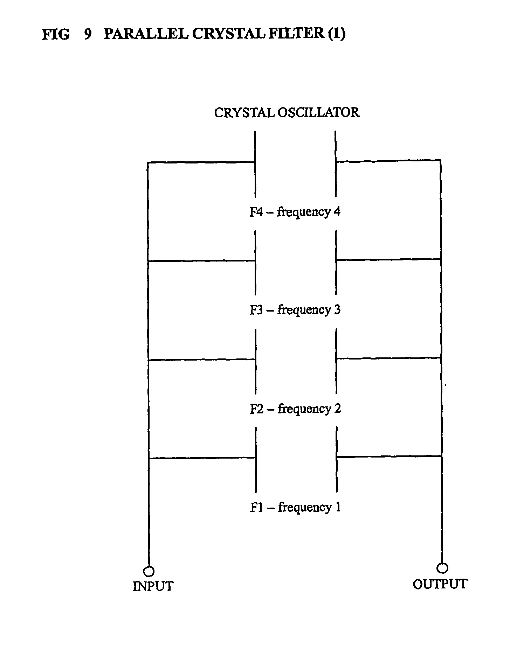

RF signals are applied to S404 via S402 & 5403. Since demodulator S404 is connected to crystal filter (Fig 9,

5

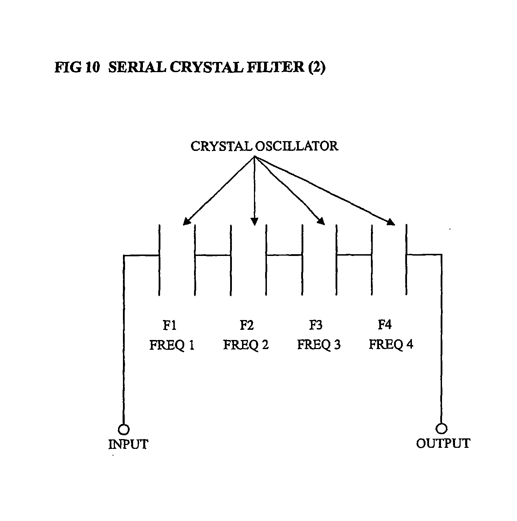

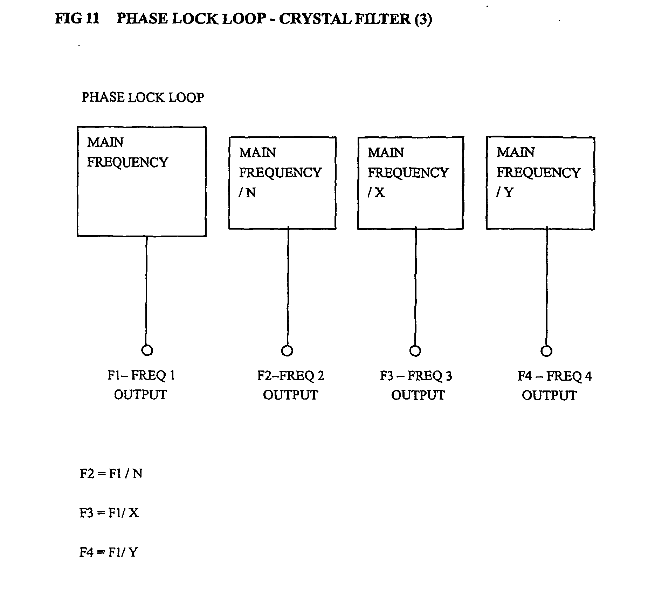

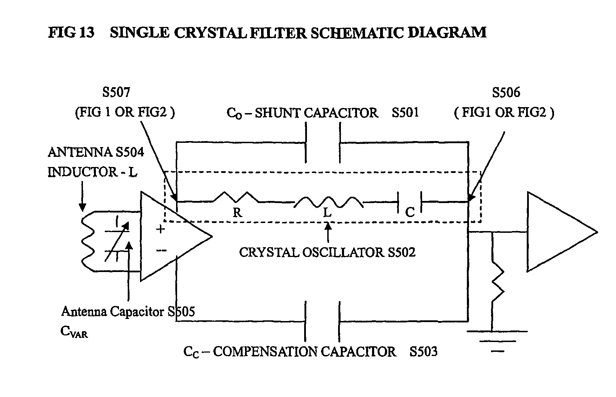

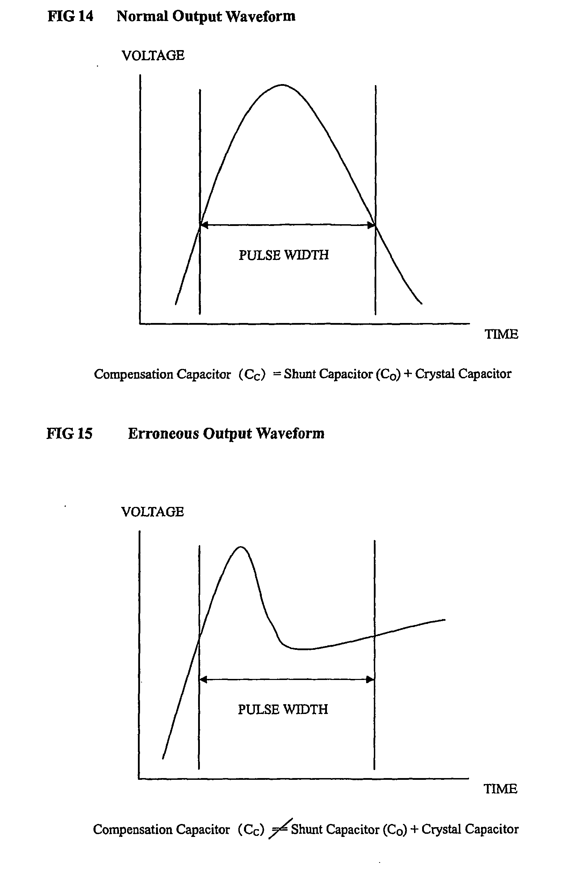

10 or 11), signals applied to S404 are filtered out by S401 & S502 and only input signals with frequencies equal to that of one of the crystals of Fig 9, 10 or 11 may pass through the filter as shown in Fig 13. Fig 13 shows the schematic diagram of a crystal filter with the functions of input, amplifying and filtering. Fig 14 shows the waveform of normal output signals after being filtered by the filter in Fig 13. Fig 15 shows the waveform of erroneous output signals after being filtered by the filter in Fig 13.

The maximum number of parallel signal input to the demodulators is equal to the number of crystals in Fig 9, 10 or 11.

Received signals are forwarded to S404 via crystal filters as shown in Fig 9, 10 or 11 at the same time. Conventional systems perform control and crystal frequency switching linearly. Instead S401 does it on a parallel basis.

The demodulators, when used in combination with S402 and S403, can process more than 1 received signal on a parallel and real-time basis.

S405 are multi-channel outputs of S404, whereas each output channel corresponds to a particular crystal frequency. (freq 1 = channel 1, freq 2 = channel 2, .........)

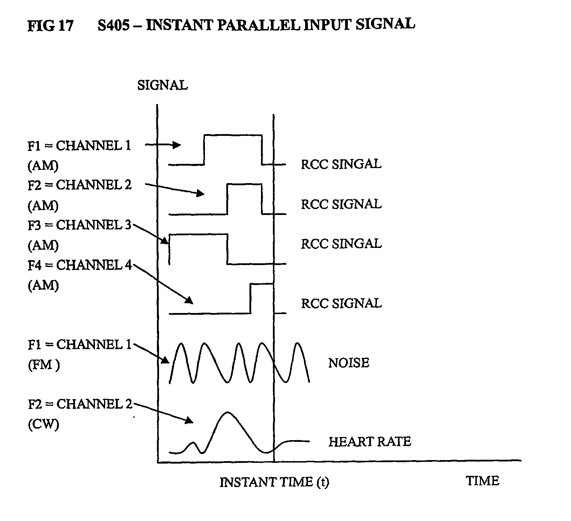

S404 outputs real-time parallel digital signals to S406 via 5405. (Fig 17)

The characteristics, continuous characteristics and trend characteristics data of RCC and heart rate signals will be explained below, which will help understand the capabilities of S406 to identify and verify signals in a multiple or single channel environment in a very short time (less than 1 second).

Heart Rate

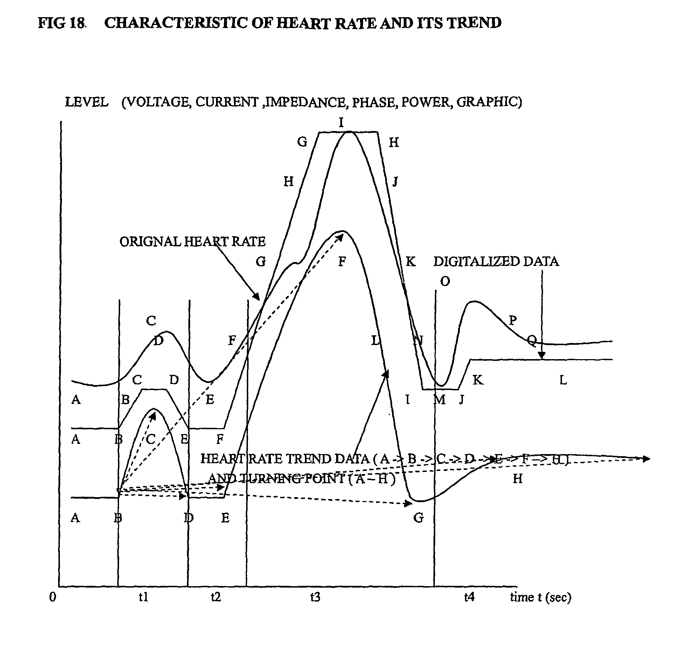

Heart rate is a periodic biomedical signal generated by regular contraction and relaxation of cardiac muscles. The regular sequence of contraction and relaxation of cardiac muscles can be treated as trend characteristics as shown in Fig 18.

The black line as shown in Fig 18 represents the original waveform of heart rate as transmitted by the heart-rate sensor, which comprises various characteristics and trend. The heart rate data is digitalized by the Analog-to-Digital Converter (ADC) and the digital output is shown with a simplified waveform in green colour in Fig 18, although the trend data (shown in red) will be more or less the same for both analog and digital data with reference to time t.

Each of the points A to H as shown in the red line is a "turning point" with reference to time t. The data of each point and their projection will be stored in the universal standard table / database of the present invention.

From the first trend A to B and the first turning point B, the system starts capturing /projecting points C to H based on a reasonable proportion of time with respect to time t.

If a portion of the incoming signal characteristics exhibit a varied behaviour with respect to time t, the system will record the data and generate a new trend characteristic based on the same. The new trend data will be stored in the universal database as a reference value for future trend prediction.

RCC Signals

RCC signals are RF signals containing time data broadcasted by stations in different countries. The time signals have a period of 60 seconds per cycle and signals containing up-to-date and current information are continuously broadcasted.

A full cycle of RCC signals comprises data of seconds, minutes, hour, day, month, year, Daylight and Reserved signal bit.

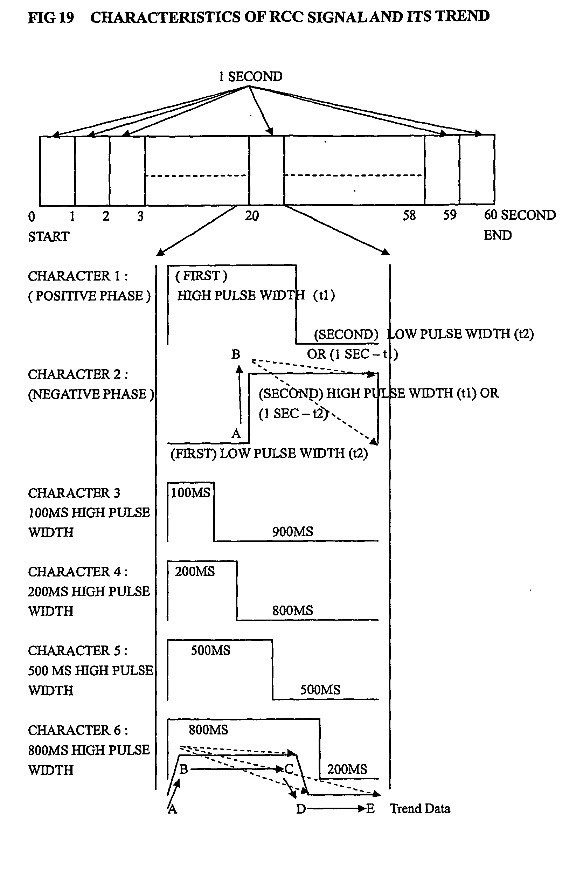

The 60-second period consists of 60 time segments / bits, ie 1 second per time segment /bit. Each time segment is loaded with encoded data such as time information with different phases and duration of high and low pulse width (Fig 19).

Referring to Fig 19, since not much change can be found in a 1-second time frame, there is not an obvious change in characteristics and trend data (as shown in A to E in red). The system starts capturing / projecting the time ratio of points C to E with respect to time t1 (1sec), t2 (1 sec) as soon as trend data A to B is known and the turning point B is reached. The reserved signal bit exhibits similar pattern of characteristics except for phase difference and the duration of high pulse width (t1) and low pulse width (t2).

The transmission frequencies and pulse widths have been discussed above and set out in Table 1 and Table 2.

Continuous characteristics and trend

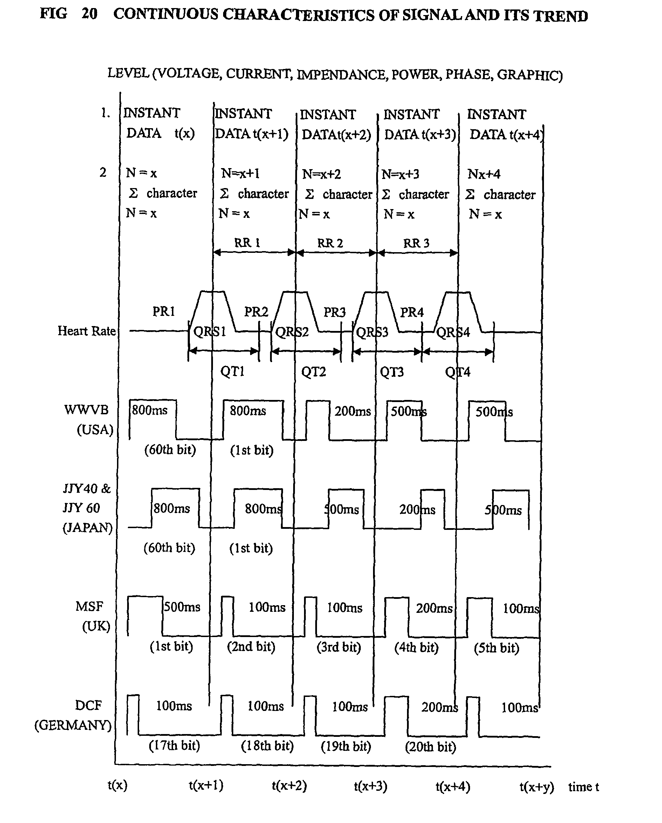

From starting time t(x) to t(x+1) second, the system receives a collection of signals including a portion of the heart rate and RCC signals as shown in Fig 20.

During t(x+1), the system is capable of tracking the heart rate signal based on the characteristics and trend data as described above in the "Heart Rate" section, and the RCC signals based on the characteristics and trend data as described in the "RCC signals" section.

Since the high pulses of both WWVB, JJY40/60 sustain for a relatively long time (800 ms), it will be difficult to identify their phase difference and thus one RCC format from another in the time segment of t(x+1) seconds, ie right after the first bit of signal is received, in a 4 bit or 8 bit processor. It is therefore required to obtain continuous characteristics data for further analysis.

Referring to the heart rate trend of Fig 20, the system is able to identify heart rate 1 and predict the signal characteristic at t(x+3) based on the characteristics data accumulated from t(x) to t(x+2), it is also possible to predict heart rate 2.

At t(x+2) second, the long high pulses of WWVB and JJY40/60 continue and the phase difference between WWVB and JJY40/60 becomes more obvious. It is therefore possible to distinguish WWVB and JJY40/60 from their different duration of high pulses in the period. In application, it often requires (x+10) seconds or more to identify the correct phase at a nearly 100% accuracy.

At t(x+2), DCF can be easily identified since the duration of all the high pulses from t(x) to t(x+2) does not exceed 500ms, it can be predicted from the accumulated characteristics of these high pulses that the duration of high pulses at the coming time period t(x+3) tends to be short, ie less than 500ms. The system will therefore be able to identify the signal since a DCF signal always has high pulses with duration of less than 500 ms.

The system can identify heart rate signals and RCC signals of different formats and their phases within the time period of t(x+1) to t(x+10).

In RCC applications, making use of the characteristics as described above together with the start bit and end bit of a signal specified in each country will give an even more accurate identification result.

Referring to Fig 20, the following characteristics may be used in identification:

Heart Rate Variation Ratio = Keep constant = Heart Rate / time

WWVB Variation Ratio = High Pulse Width / Time > MSF > DCF

JJY40&60 Variation Ratio = High Pulse Width / Time = WWVB Variation Ratio > MSF > DCF

MSF Variation Ratio = High Pulse Width / Time > DCF

WWVB phase is opposite phase of JJY40&60.

Continue Character = High Pulse Width / Time Ratio + Instant High Pulse Width / Time

Ratio + Start Bit + End Bit + Marker Bit

The construction and operation of the universal automatic scanner S406 will now be described. S406 is a universal automatic scanner which supports single antenna-single output and multiple antenna-multiple output as shown in Fig 20.

In the case of single antenna-single output, components S404, S405, S408 and S411 will be replaced by an independent and single output unit. The scanning capabilities and parameters are as follows:-

Basic scanning time:  $\Delta t$ x no of channels x no of format

$$\text{Typical scanning time of single antenna} = 1 \text{ sec x } 1 \text{ channel x no of formats}$$

$$\text{Typical scanning time of multiple antenna} = 1 \text{ sec x } n \text{ channels x no of formats}$$

$$\text{Time of phase tracking (single antenna)} = 10 \text{ sec x } 1 \text{ channel x no of formats}$$

$$\text{Time of phase tracking (multiple antenna)} = 10 \text{ sec x } n \text{ channels x no of formats}$$

$\Delta t$ refers to the time needed for scanning one of the frequencies / formats of one of the channels.

When the scanning time is greater than $\Delta t$, S409 will change the frequency of S403 via controller / signal line S410 in order to scan the next frequency / format adopting formula (1).

When the scanning frequency is predetermined, the frequencies are set according to different RCC standards, e.g., MSF (60kHz), WWVB (60kHz), JJY (40kHz & 60kHz), DCF (77.5kHz) and 67kHz (China).

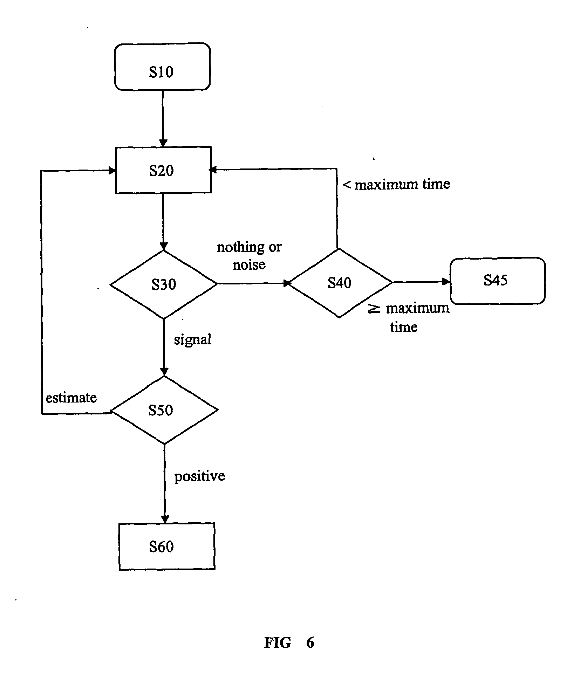

The operation of the microcontroller 120 controlled by instructions stored in the non-volatile memory 130 of the first embodiment, and the universal scanner S406 of the second embodiment, is the same and will now be explained in detail with reference to Figure 6. Figure 6 is a flow chart of the identification process.

In step S 10, the microcontroller is switched on and initialised, and the program memory is reset. Also in this step the frequency band to be analysed is set (40 kHz to 100 kHz in this embodiment). Finally in this step, a first variables such as step register, instant positive phase characteristics register, instant negative phase characteristics register, instant pulse width characteristics register, continuous positive characteristics register, continuous negative phase characteristics register, continuous instant pulse width characteristics register, instant heart rate register and continuous heart rate register which represent the stage in the identification and decoding process are created and initialised to a value of zero.

Operation then proceeds to step S20 where the first samples are received is stored in the microcontroller S406 under a parallel and real-time environment S404 and S405. The method then continues to step S30.

In step S30, the stored samples are analysed for particular characteristics of the signal as explained above on a parallel and real-time basis and compared to a stored parameter table of known signal characteristics (Universal Standard Table / Database) contained in the non-volatile memory 130 in the first embodiment and S412 in the second embodiment. The way in which the parallel real-time signals are analysed will depend on the capabilities of the microcontroller 120 in the first embodiment and S406 in the second embodiment. In these embodiments a simple microcontroller is used to reduce the cost, and therefore only operations such as addition, subtraction, multiplication and division are available. More advanced processors, such as a Digital Signal Processor (DSP) could carry out more advanced mathematical analysis of the signal.

One simple way to characterise the signal is to use the methods described above of the trend of the signals which can give an idea of the behaviour of the signal over the period. This involves determination of the characteristics of signals (such as pulse width, amplitude, current, impedance, voltage, power, phase, phase angle and vector) including their variance and turning points with respect to time. (A turning point is a discontinuity in the characteristics of the sampled signals, in effect a step change in the gradient of the characteristics of the signals).

The analysis in step S30 looks for common features of all RCC systems. For example, is there a pulse present having a width of 100 ms, 200 ms, 500 ms or 800 ms and if so is the pulse aligned with the start or end of the 1 second period? The features are identified by comparing the characteristics of the stored signal with values representing these characteristics stored in the parameter table in the non-volatile memory 130 in the first embodiment and 5412 in the second embodiment.

In these embodiments, which are applied to the identification of an RCC standard RF signal and also to a Heart Rate signal, the parameter table holds characteristics based on the following features of the signal:

1. The range of pulse widths which can be determined as belonging to an RCC standard. For example ranges of 650 ms - 950 ms (corresponding to a 800 ms pulse), 300 ms - 600 ms (corresponding to a 500 ms pulse), 150 ms - 250 ms (corresponding to a 200 ms pulse), and 30 ms - 135 ms (corresponding to a 100 ms pulse). The ranges used include a tolerance to allow for possible variations in pulse widths introduced for example by atmospheric conditions, a weak received signal, or the use of a different RF receiver. Other tolerances may also be used, resulting in different pulse width ranges.

2. Patterns of pulses which can be contained in the predetermined period of 1 second, such as the RCC pulse durations discussed above and given in Table 2.

3. Specific patterns relating to each RCC standard, such as the "end" and "start" pulses and "marker" pulses.

4. Instant characteristics RCC pulse register.

5. Continuous characteristics of RCC pulse, continuous pulse width / continuous time ratio.

6. Instant phase (positive or negative) characteristics, low width pulse followed by high width pulse (positive instant phase) and high width pulse followed by low width pulse (negative instant phase).

7. Continuous phase (continuous positive or negative) characteristics, timing between two rising edges (positive phase) or falling edges (negative phase) of RCC pulse is exactly 1 sec.

8. Heart Rate - PR interval, QRS interval, QT interval, RR interval and ratio of any combination.

9. Continuous characteristics of RR interval of Heart Rate and ratio of any combination [S005].

If the characteristic matches a characteristic in the parameter table it is determined that a signal is present and execution proceeds to step S50. Alternatively, the signal may be determined as nothing (a signal is absent) or as noise (a signal is present but it does not meet the requirements of a data signal), in which cases execution proceeds to step S40.

When S30 receives the first pulse from S405, S30 will extract the characteristics of the pulse and match the value of stored parameter table S412 and the corresponding frequency, channel and demodulator.

If the corresponding frequency, channel and demodulator (for example the frequencies and channels for RCC data set out in tables 1 and 2 above) is correct, nothing will change and execution proceeds to step S50. All instant characteristics register, increment step register are stored, instant characteristics are added to continuous characteristics register to generate data regarding continuous pulse width / continuous time ratio, instant phase characteristics are added to continuous phase characteristics register and the frequency, channel and demodulator is set to the corresponding RCC or Heart Rate signal.

If the corresponding frequency, channel and demodulator (for example the frequencies and channels for RCC data set out in tables 1 and 2 above) is incorrect, there are two possible courses of action. Either:

(i) S30 will predict the next scanning frequency, channel and demodulator and modify the same to the received pulse based on the information in table 1 and table 2 and the continuous characteristics and trend depicted in Figure 20 and discussed above; or

(ii) if the corresponding frequency, channel and demodulator (for example the frequencies and channels for RCC data set out in tables 1 and 2 above), is not the same with the indicated / predicted frequency, channel or demodulator from continuous characteristics register and continuous phase characteristics register value, S30 will predict and modify the scanning frequency, channel and demodulator to the received pulse based on the indicated / predicted frequency (Trend(f)) from the continuous characteristics register and continuous phase characteristics register

For example, the continuous characteristics and phase characteristics register =>

DCF Trend (f) = 77.5kHz

MSF Trend (f) = 60kHz

JJY60 Trend (f) = 60kHz

JJY 40 Trend (f) = 40kHz

WWVB Trend (f) = 60kHz

Original frequency or band = f1

Changed / Predicted frequency or band = f2

$$\text{New scanning frequency / Search frequency} = \text{Trend (f)} = f1 - f2$$

$$\text{New scanning band / Search Band} = \text{Band (f1)} - \text{Band (f2)}.$$

S30 will send the trend frequency or f2 frequency or band frequency parameter to S403,
S404 to change the frequency, channel and demodulator through S410,and reset the maximum time counter as described above.

The equations can be applied in a first example as:

$$\text{Trend(f)} = \text{From Search(f) to trend target frequency} = \text{a different band (eg WWVB, DCF, etc).}$$

In a second example, the equations can be applied as:

$$\text{Trend(f)} = \text{From Search(f) to Trend target frequency} = 77.5 \text{ kHz} - \text{any one frequency}$$

A numerical example of the use of the equations in the second example will now be given.

The original frequency is set at 77.5 kHz (the same frequency as DCF). The signal is then predicted as JJY transmitted at 40kHz and Trend(f) is then used to change the frequency or band as follows:

$$\text{Trend(f)} = \text{Search(f) } 77.5 \text{ kHz DCF} - \text{target frequency / band } 40 \text{ kHz JJY}$$

$$\text{Trend(f)} = \text{Search (f)} - \text{Target Frequency}$$

$$\text{Trend(f)} = 77.5 \text{ kHz} - 40 \text{ kHz}$$

Trend(f)= 37.5 kHZ (i.e. from original frequency jump 37.5 kHZ to the target frequency.

Alternatively, the equations may be applied as:

$$\text{Trend(f)} = \text{Search(f) Band 1} - \text{Target Band 2}$$

$$\text{Trend(f)} = 1 - 2$$

Trend(f) = 1 Band different from the original frequency, i.e. jump one band to the target frequency.

In step S40, the time elapsed $\Delta t$, is compared to a predetermined maximum time. The predetermined maximum time corresponds to the predicted longest time to identify an RCC and heart rate signal if one is present. If it is determined that the maximum time has elapsed it is determined that no signal can be found and the apparatus is shut down in step S45. If it is determined that the maximum time has not yet elapsed the signal characteristics in step S30 are accumulated and stored in the volatile memory 140. Execution then returns to step S20, to gather a further period of the signal.

The maximum time used in step S40 is calculated by multiplying the time taken $\Delta t$ to identify an RCC standard by the number of channel and number of possible RCC and Heart Rate standards which can be detected.

For example, in this embodiment seven formats (WWVB, JJY 40 & 60, MSF, DCF, China and Heart Rate) can be detected, and it can take up to 15 second to identify a particular format. The maximum time can be determined using the typical scanning time equations given above. Therefore the maximum time in this embodiment is:

15 seconds × 1 channel (no. of channels communicating with the demodulator and microcontroller) × 7 formats = 105 seconds

In step S50, the method starts to identify the RCC and Heart Rate standard employed. This is achieved by looking up the instant characteristics of pulse (refer to the description above and Figure 18 and 19), and accumulated continuous characteristics of pulse stored in the universal table (refer to the description above and Fig 20).

However, a positive identification cannot often be made on the basis of a single one second period which corresponds to only one data bit. Positive identification requires a pattern of data bits consistent with a particular RCC and Heart Rate data standard until a positive identification of the signal can be determined as depicted in Figure 20.

Thus, in step S50, if it is determined that only an estimation of the signal is possible, the sample values are accumulated as described above to allow tracking of the signal over a longer period than one second and execution returns to step S20. However, if it is determined that a positive identification is made, all registers are updated and set to values representing the identified RCC and Heart Rate standard; execution then proceeds to step S60. The positive identification may be made by predicting the next value of the signal (see for example Figure 20). For example if the estimate was DCF, the next value of the signal in the subsequent bit period may be predicted. If the prediction agrees with the actual value this allows a more positive identification of the signal.

In step S60, the step register value indicates that the RCC and Heart Rate standard used in the received signal has been identified. The method then proceeds to check for synchronisation of the signal. It is determined that the signal is synchronised when the pulses in the signal are accurately aligned with either the start or the end of a bit period. Once it has been determined that the signal is synchronised, execution of the method ends by outputting the identified format and first and second data bytes representing the pulse received to a universal RCC standard decoder.

Returning the construction depicted in Figures 5 and 12, once a match has been determined by the microcontroller S406, the format and synchronisation timing are output via an output terminal S411 to a universal decoder 150, S408 for the RF data.

The universal decoder can be a separate unit, as in this embodiment, or may be integrated into the microcontroller 120, S406.

In general terms, the universal decoder 150, S408 makes use of the fact that although each RCC and Heart Rate standard transmits data in a different order, much of the same type of data is transmitted. For example, all RCC standards include data for year, hour and minute. Thus, storage space for the decoding table can be reduced by including common features only once, rather than repeating them for each standard. For example, all of the RCC standards used in this embodiment use binary coded-decimals to encode a numerical value. Thus the universal decoder 150 can include a single routine to decode a binary coded decimal, without requiring a separate routine for each point in the standards in which a binary coded decimal is used.

The universal decoder 150, S408 includes an RCC/RF format table 151, S412. The RCC/RF format table 151, S412 contains specific instructions necessary to decode a particular RCC modulation format (for example WWVB, JJY, etc.).

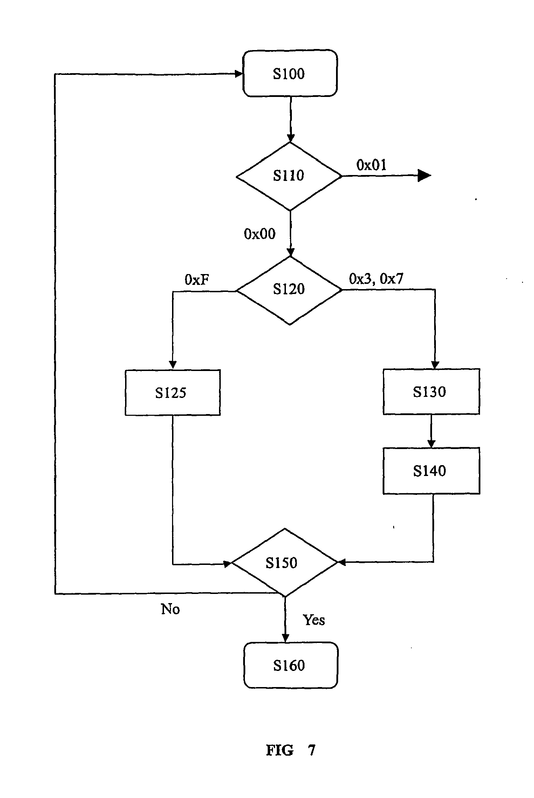

The detailed operation of the universal decoder 150 will now be described with reference to Figure 7.

In step S100, the universal decoder receives a format code and first and second data bytes from the microcontroller 120, S406.

The format code represents the format of the data identified. In step S 110, the decoder selects the correct format table to decode the data bytes. In this embodiment, the code 0x00 (where 0x represents a hexadecimal number) signifies that RCC data has been identified and the universal decoder 150, S408 will activate the RCC/RF format table 151, 5412. Other format codes can signify different types of data, for example an FM signal could be indicated by a format code of 0x01. In alternate embodiments, the universal decoder includes further data tables to decode other types of data. However, in this embodiment operation for RCC data formats only will be explained.

In step S 120, the method moves on to process the first data byte. The first data byte indicates the type of information contained in the second data byte. The second data byte indicates the value of the corresponding type of information of first data byte as given in Table 5 below. Likewise, byte values are assigned to all the various types of values which are transmitted in the standards. The same principles can be applied to other data.

Table 5

| 1st Byte | 0x0 | 0x1 | 0x2 | 0x3 | 0x4 | 0x5 | 0x6 | 0x7 | 0xF |
|---|---|---|---|---|---|---|---|---|---|
|  | SEC | MIN | HR | WK | DAY | MONTH | YR | DAY LIGHT | MARKER |

(continued)

| 2nd Byte | 0x0 | 0x1 | 0x2 | 0x3 | 0x4 | 0x5 | 0x6 | 0x7 | 0xF |
|---|---|---|---|---|---|---|---|---|---|
| | 1 | 2 | 4 | 8 | 10 | 20 | 40 | 80 | |

If it is determined that the first data byte is a code byte from 0xC to 0xF, operation proceeds to step S 125 to perform checking, calculation operation by universal decoder S408; if it is determined that the first data byte is a data code from 0x0 to 0xD, operation proceeds to step S 130 to extract the data value and decode by S408. The second data byte signifies the value of the data and is decoded in steps S125 and S130.

In step S125, depending on the value of the second data byte, the presence of a marker pulse is recorded. For example, table 3 below gives the correspondence used between the value of the second data byte and the length of the marker pulse detected.

Table 3 - Pulse width and second data byte values for a code byte (marker pulse)

| Pulse Width/ms | 100 | 200 | 300 | 400 | 500 | 600 | 700 | 800 | 900 | Blank |
|---|---|---|---|---|---|---|---|---|---|---|
| Second Data Byte Value | 0x1 | 0x2 | 0x3 | 0x4 | 0x5 | 0x6 | 0x7 | 0x8 | 0x9 | 0xA |

In step S130, depending on the value of the second data byte, the value of the data byte (second, minute, hour, week, day, month, year, daylight) is determined according to the relation given in table 4 below.

Table 4 - Numerical values and second data byte values for data code (second, minute, hour, week, day, month, year, daylight).

| Second Data Byte Value | 0x1 | 0x2 | 0x3 | 0x4 | 0x5 | 0x6 | 0x7 | 0x8 | 0x9 | 0xA | 0xB | 0xC |
|---|---|---|---|---|---|---|---|---|---|---|---|---|
| Numerical Value | 1 | 2 | 4 | 8 | 10 | 20 | 40 | 80 | 100 | 200 | 400 | 800 |

In step S 140, the numerical value is stored for data (year, daylight) depending on the value of the first data byte.

In step S150, it is determined whether a complete time code has been received. If not, operation returns to step S100 to process further pairs of first and second data bytes representing the rest of the code. If a complete time code has been received the stored results are output in step S160.

So that the complete time code can be decoded, the universal standard decoder S408 will need to operate and store the results of a full data frame of RCC standard data. Therefore, the decoder will need to operate for 60s to decode the signal fully.

The use of the parameter table and universal standard decoder S408 enables the apparatus of this embodiment to be easily adapted to additional RCC standards. All that is required is an additional entry in the parameter table and in the RCC/RF format table S412. This can be done by updating the software, with no need to alter the hardware.

Another benefit of the apparatus is that the storage space required for the parameter table and operation instruction is particularly low. A basic microcontroller may only be able to address 4 K byte of memory. It is possible to implement the identification method of this embodiment in 1 K bytes of instruction code. An entry in the parameter table only about 0.5 K bytes for each country and an entry in the RCC/RF format table S412 takes up only about 120 bytes for each country. This is a significant improvement over a prior linear scan apparatus, which may require as much as 1.5 K bytes storage for each band. Therefore, the apparatus has the possibility to identify a greater number of different signal types than a prior linear scan.

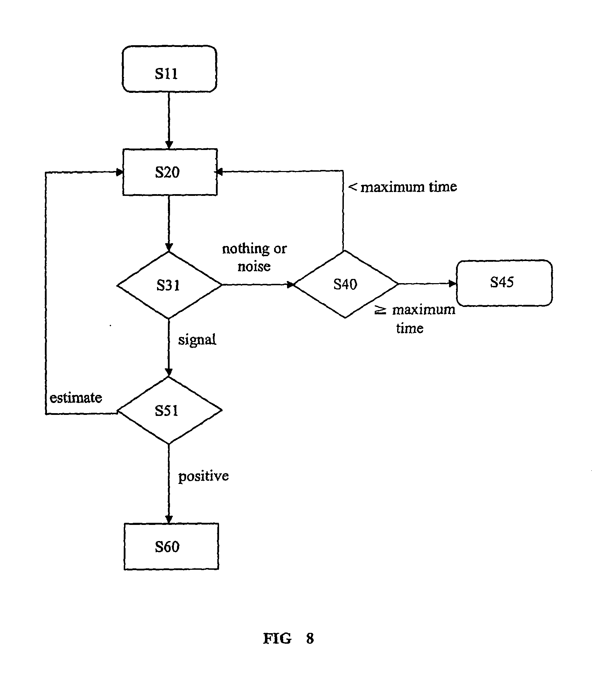

Another method according to the invention the invention will now be described with reference to Figure 8, the construction and operation of this embodiment is identical to the other embodiments save as described below.

Step S11 corresponds to step S10. However, in this embodiment, the signal frequency in step S11 is set to a particular frequency corresponding to an RCC format. Thus, instead of scanning the whole of a wide band, a particular band is chosen. For example, in this embodiment the apparatus can detect and decode WWVB, DCF, MSF, JJY and China RCC formats. The signal frequency which is sampled may then be set to 40 kHz, 60 kHz or 77.5 kHz. The choice of which frequency is initially used may be based on the last signal identified, or other means such as present choice.

In order to identify a signal on another band, it may be necessary to switch to a different frequency. Step S31 can therefore control switching to different frequency if no signal can be identified at a given frequency. Step S51 can also control switching to different frequencies based on a prediction of the likely frequency of the signal. The frequency which is chosen to switch to can be based on a prediction of the most likely frequency.

The apparatus and method of the above embodiments can be applied to the identification of any RF signal type, not just RCC standard data. This can be achieved simply by creating an entry for the signal type in the parameter table. For example, other modulation formats could be recognised including, but not limited to, Frequency Modulation (FM), Phase Modulation (PM), Phase Shift Keying (PSK), Frequency Shift Keying (PSK), CW +FSK, CW, AM, CW+PSK, AM(LSB) and AM(USB). Furthermore, the apparatus and method can be extended to include the decoding of other digital modulation formats, by placing relevant entries in universal standard table/database S412. Alternatively, if another modulation format is identified, the microcontroller can include instructions to operate an additional decoder provided for the other modulation format.

In the above embodiments a combined RCC and heart rate decoder has been described. However, in alternate embodiments an RCC decoder alone or a heart rate decoder alone may be provided.

In all the above embodiments individual components have been described. However the various components can also be integrated in one or more integrated circuits.

The microcontroller could also be implemented by a DSP, ASIC or on a general purpose computer with a microprocessor.

The methods described above can be implemented either by software or firmware, or by hardware.

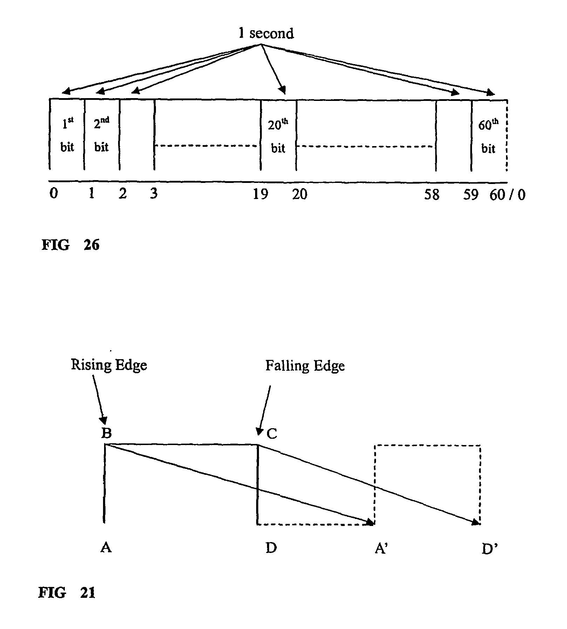

A further embodiment of the identification and decoding method will now be described with reference to Figures 21 to 26. This method may be carried out by the hardware described above in the embodiments of Figures 5 and 12.

As has been discussed above, time information of a country may be transmitted by time signals. The time signals are successive pulses where each pulse has duration of exactly 1 minute, ie 60 seconds. Each pulse is further divided into 60 bits, ie 1 bit per second, transmitted at high pulse duration of 100ms, 200ms, 500ms or 800ms. This division is shown in Figure 26.

The duration of high / low pulses of a particular bit varies from one minute to the next except for the Start Bit, Marker Bits, Reserved Bits and End Bit. For example, the 30th bit of the current minute may be made up of high pulse of 800ms and low pulse of 200ms, whereas the 30th bit of the next minute may be made up of 500ms high pulse and 500ms low pulse. This is a complicated change of pattern which a 4-bit Microcontroller (MCU) does not have capacity to deal with.

As the combination of high / low pulses in a bit may vary in every minute, it will be impossible to identify the modulation format of an RCC signal by merely comparing the time position of bits.

The 1-minute cycle of time signals transmitted by each country must consist of a Start Bit and an End Bit. Some time signals also comprise Marker Bits, Reserved Bits and Blank Bits.

The various pulse widths in the Start Bit, Marker Bits, Reserved Bits and End Bit of the various standards used in the example countries have already been given in Table 2 above. The Reserved Bits, unlike the others, comprises high pulse of 100ms and is the same in all country standards. The Reserved Bits may be altered by the country's transmitting station for weather information transmission in the event of hurricanes, earthquakes, floods etc.

It will also be useful to identify the characteristics and composition of the different RCC standards so as to understand the operation of the present invention.

WWVB and JJY are made up of high pulse bits of 200ms, 500ms and 800ms. Both the Start (1st bit) and End (60th) Bits are of 800ms high pulse. There are also 5 Marker Bits of 800ms high pulse width at the 10th, 20th, 30th, 40th and 50th bits. There is only 1 consecutive 800ms high pulses throughout every 1-minute transmission, ie the Start and End Bits. All the WWVB signals are identical with those of JJY at an inverted phase.

MSF has a Start (1st) Bit of 500ms high pulse, followed by approximately 16 Reserved Bits. The rest of the bits are made up of high pulses of 100ms and 200ms.

DCF has a Start Bit in the 21 st bit at 200ms and the End Bit in the 60th bit is most of the time blank.

All the Reserved Bits according to the different standards in different countries are the same at 100ms high pulse.

Table 6 below sets out these characteristics.

Table 6

| Band Name | Time Position of the respective Bits | | | | | |
| --- | --- | --- | --- | --- | --- | --- |
| | Start Bit | Start Bit Pulse (ms) | Marker Bits of 800ms | End Bit | End Bit Pulse | Reserved Bits of 100ms |
| DCF | 21st | 200 | - | 60th | blank | 1st - 15th and 20th (16th-19th are always not used |
| MSF | 1st | 500 | - | 60th | 100 | 2nd - 17th |

(continued)

| | | | Time Position of the respective Bits | | | | |
|---|---|---|---|---|---|---|---|
| JJY | 1st | 800 | 10th, 20th, 30th 40th, 50th | 60th | 800 | - |
| WWVB | 1st | 800 | 10th, 20th, 30th, 40th, 50th | 60th | 800 | - |

The standards set out in Table 6 are open and released by the respective official authorities of each of the countries.

1 . Identification of an RCC Signal

The identification of an RCC signal according to the present invention will now be discussed. When a signal is received, the system will first determine whether the incoming signal is an RCC signal by checking both of :-

(i) The duration of the complete signal received; and
(ii) The range of high pulse duration of the received signal.

Each of these checks will now be described in more detail.

1.1 The duration of the complete signal received

An RCC signal bit consists of a high pulse and a low pulse which together makes up a complete pulse of exactly 1 second. Signals with high pulse at the beginning of second are referred to as positive phase pulses (or positive pulses) and those with low pulse at the beginning of a second are referred to as negative phase pulses (or negative pulses). Since the phase of an incoming signal is unknown at the beginning, it will be necessary to measure the duration of both the positive and negative phases, which are represented by B-A' and C-D' respectively in Fig 21.

The time duration of B-A' can be measured by using a phase timer 1. Phase timer 1 is first initialized to 0 at turning point B and starts counting the time elapsed from B to A', ie one rising edge to the other. The duration C-D', on the other hand, is measured by using a phase timer 2 in a similar manner and starts ticking at turning point C, except that it measures the duration from one falling edge to the other.

In order to identify the signal received is an RCC signal, at least one of the two Phase timers' data must be equal to exactly 1 second. Otherwise the signal will be identified as an error or noise.

1.2 The range of the high pulse duration of the received signal

As the result of repeated error test experiments, the range of acceptable high pulse duration of a particular bit must fall within the bounds as set out in Table 7 below:-

Table 7

| Acceptable High Pulse Range | Deemed Correct High Pulse |
|---|---|
| 650ms to 950ms | 800ms |
| 300ms to 600ms | 500ms |
| 150ms to 250ms | 200ms |
| 30ms to 135ms | 100ms |

The distorted pulse duration may be due to interference of other signals or noise. High pulse durations falling out of the above ranges are considered as error by the system.

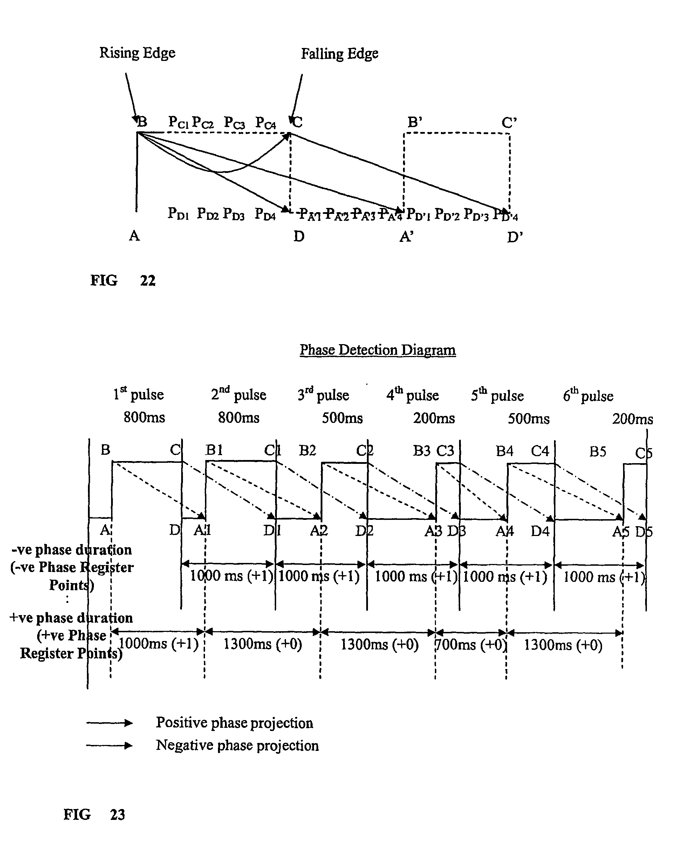

In order to obtain the information of the phase of a pulse, it will be necessary to project and measure the time position of points C and D as shown in Fig 22.

At turning point B, the position of points C and D will be projected. Since the time position of these points can only be one of 100ms, 200ms, 500ms and 800ms, the system will project 4 possible points of C, ie $P_{C1}$, $P_{C2}$, $P_{C3}$, and $P_{C4}$, and similarly 4 possible points of D, ie $P_{D1}$, $P_{D2}$, $P_{D3}$, and $P_{D4}$, respectively. All of these projected points should, however, fall within the acceptable high pulse range in Table 7.

When turning point C is reached, the system will compare its actual time position with the projected time positions. If the actual time position matches with any one of the projected point ranges $P_{C1}$, $P_{C2}$, $P_{C3}$ or $P_{C4}$, this requirement is met. This can be further confirmed by comparing the projected point ranges $P_{D1}$, $P_{D2}$, $P_{D3}$ and $P_{D4}$ and the actual point D as the time position of D should always be the same as point C.

In the event of the reception of a distorted signal falling within bounds of the high pulse range set out in Table 7, projection is based upon the deemed correct high pulse signal as if the correct instant signal was received. Assuming an incoming signal with a high pulse width of 800ms is received as 750ms due to interference, points C ($P_{C1}$, $P_{C2}$, $P_{C3}$, and $P_{C4}$), D ($P_{D1}$, $P_{D2}$, $P_{D3}$ and $P_{D4}$) and A' ($P_{A'1}$, $P_{A'2}$, $P_{A'3}$, and $P_{A'4}$) will be projected as if the instant signal received was 800ms. This projection is possible because 750ms falls within the range of 650ms to 950ms.

If, however, the interference / distortion is so severe or a wrong signal is received such that the high pulse received falls outside the ranges set in Table 7, eg 990ms, no projection can be carried out and the system will reset and restart receiving new signals.

2. RCC Signal Projection and Connection

Pulses are being identified and filtered in the above steps and are connected with each other by projection as shown in Fig 22.

In Fig 22, points C, D and A' are projected according to the method mentioned above as soon as a rising edge AB is received. The early projection of point C at the possible projection ranges of $P_{C1}$, $P_{C2}$, $P_{C3}$ and $P_{C4}$ will form a simulated pulse before the point C is actually reached. The system will only accept signals falling in the projection ranges. This will enable the system to ignore any interferences such as noise signals which fall outside the projection ranges received between the projected time positions.

For example, if a noise signal falling outside the projection ranges from Point B to Point C before C is actually reached, the system will ignore that noise signal received. If, however, there is no projection of the possible range of point C, the system may take the noise signal received as one complete pulse before the actual point C is reached thus affecting the accuracy of processing of the actual signals intended to be received and evaluated.

The continuous projection of points as illustrated in Fig 22 will ensure that the RCC signals received are accurate and in a waveform suitable for scanning.

3. Scanning of RCC Signals

The identification of RCC signals and RCC signal projection and connection described above are both carried out simultaneously by a software before the signals are passed to Universal Scanner S406 for scanning. The following paragraphs form a description of the operation of S406. All the scanning activities described below are also carried out simultaneously.

In the system of the present invention, a default frequency can be set at any frequency selected from those set by the system, in the present case 40, 60 and 77.5 KHz. The system may be expanded to receive more other frequencies if new RCC frequencies transmitted by other countries come up. For illustration purposes, we set 77.5KHz as the default frequency in the examples given below.

3.1 Instant Characteristics v. Accumulated Characteristics

According to the present invention, there are two kinds of characteristics that should be taken into account in prioritization of bands to be locked and prepared for decoding namely, Instant Characteristics of the very pulse received at the instant and Accumulated Characteristics of a continuous plurality of pulses received.

Such characteristics form the "trend" of the signals as referred to above. Said trend or characteristics of RCC signals are quantified as Priority Points in the present invention for the sake of easier understanding.

The algorithm for Priority Points will depend on the two different phases, ie during the Initial Phase when the system first starts receiving signals, ie the first one second, and the Continuous Phase thereafter.

During the Initial Phase, ie the first one second, Priority Points (which are made up of Character Points and Register Points) will depend on Instant Characteristics because at that instant no earlier signal has been received by the system, whereas during the Continuous Phase, Continuous Characteristics will become dominant in the calculation of Priority Points although the Instant Characteristics will also have to be taken into account during the Continuous Phase.

The Priority Points required for band/frequency switching are different according to the priority of the priority band and the phase (Instant or Continuous) of the incoming signal. When the required Priority Points are reached and the required Register is set, the system will either:

(1) lock the current band and switch to the suitable frequency (if necessary); or

(2) switch to and lock the new band and frequency;

The system can then optionally start the preparation stage of decoding.

3.2 Priority Pulse Registers

3.2.1 3 Pulse Registers

There are 3 different priority pulse registers classified according to the RCC pulse widths, namely: (1) 800ms Register; (2) 500ms Register, and (3) Short-pulse Register; all of which are stored in the MCU of the system.

The number of Pulse Registers may be expanded if other pulse widths of new RCC standards are introduced.

Each register is used for recording the presence of a pulse of particular character in a single or plurality of signals received. The 800ms Register is for recording the presence of 800ms high pulse, the 500ms Register is for recording the presence of 500ms high pulse. In view of the fact that 200ms and 100ms pulses are too close to distinguish, they are often taken as identical among the signals received for the purpose of priority setting. The Short-pulse Register is for recording the presence of both 200ms or 100ms high pulse.

The assignment / switching of priority band / bands corresponding to the Pulse Registers are as follows:

| Pulse Register | Priority Band(s) | Priority |
|---|---|---|
| 800ms | WWVB and JJY | |
| 500ms | MSF | ↑ |
| Short-pulse | - | |

In other words, the 800ms register has the highest priority and the Short-pulse register has the lowest priority.

In practice, all pulse registers have the same logical value of "0" (which can alternatively be referred to as "false" or "no") at the beginning. The setting of a Pulse Register will prompt the system to switch to the corresponding priority band/frequency and start the preparation stage of decoding. Here by setting a Pulse Register we mean setting the Pulse Register from 0 to 1, by resetting we mean the *vice versa.*

3.2.2 Setting and Resetting Pulse Registers

The reception of the first pulse with high pulse width of 800ms will set the logical value of the 800ms Register from 0 to 1 (which can alternatively be referred to as "true" or "yes"). All other pulse registers remain unchanged at a value of 0. The system assigns priority band to WWVB and JJY as the 800ms Register is set.

Similarly, if the first high pulse received is not 800ms but a 500ms one, the system will only set the 500ms Register. All other pulse registers remain unchanged at a value of 0. The system assigns priority band to MSF as the 500ms Register is set.

If the first high pulse received is 200ms or 100ms, the system will only set the Short-pulse Register. All other pulse registers remain unchanged at a value of 0. The setting of the Short-pulse Register will NOT assign any priority band due to its low priority.

The switching of a lower priority band, say DCF, to a higher priority band, MSF or WWVB/JJY, only requires that the respective 500ms Register or the 800ms Register be set to a logical value of 1. There will be no resetting of lower priority Registers. For example, the switching of MSF (500ms Register set) to WWVB/JJY due to an incoming signal of 800ms will set 800ms Register thus overriding the lower priority 500ms Register but the 500ms Register will not be reset so that information of the presence of a 500ms signal among the series of signals received is still in the system.

However, the switching of a higher priority band, say WWVB or JJY to a lower priority band, say MSF, will require setting of the 500ms Register and also resetting of the original 800ms Pulse Register because if the 800ms Pulse Register is not reset it still presides over the 500ms Register according to the priority set to the Pulse Registers as shown above. The resetting of a higher priority Pulse Register requires the accumulation of Accumulated Characteristics in the Continuous Phase which will be discussed in the following paragraphs.

The setting of a Pulse Register (with the exception of Short-pulse Register due to its low priority) has the effect of switching to the priority band.

The switching to a priority band will reset all the Priority Points immediately after switching.

Preparation stage of decoding may start immediately after switching band if such option has been enabled by the user.

3.3 Priority Points

Priority Points are made up of Character Points and Register Points and are used in both the Initial Phase and the Continuous Phase. Firstly, the character points will be described.

3.3.1 Character Points

In the Initial Phase where only 1 second of signal is received, only the Instant Characteristics, ie the characteristics of the instant pulse received, will contribute to the Priority Points.
$$\text{Character Point of the signal received}$$

$$= \text{High pulse duration} \div \text{complete pulse duration (ie 1 sec)}$$

That is: for any instant 800ms duration of high pulse received, the Character Point is:

$$800 \div 1000 = 0.8$$

for 500ms duration of high pulse received, the Character Point is

$$500 \div 1000 = 0.5$$

for 200ms duration of high pulse received, the Character Point is

$$200 \div 1000 = 0.2$$

for 100ms duration of high pulse received, the Character Point is

$$100 \div 1000 = 0.1$$

Thus, the Instant Character Point or Character Point is proportional to the length of the high pulse duration (or strength of the pulse) as shown below.

| Pulse (ms) | Instant Character Points | Priority |
|---|---|---|
| 800 | 0.8 | |
| 500 | 0.5 | |
| 200 | 0.2 | |
| 100 | 0.1 | |

### 3.3.2 Register Points

The use of Register Points will now be described. The setting of Pulse Register will generate Register Points, the value of which will depend on the presence of any zero value Pulse Register of a higher priority. Each Pulse Register carries 1 Register Point. For EACH zero value Pulse Register with a higher priority than the instant pulse received, 1 Register Point will be added to the Priority Point value. 1 Register Point will be given anyway if the priority of the instant pulse received is the same as that of the highest priority Pulse Register, eg 1 Register Point will be given to 800ms anyway even there is no higher priority Pulse Register exists.

### 3.4 Calculation of Priority Points

### 3.4.1 During the Initial Phase

Let the default frequency be 77.5 KHz, the settings of Pulse Register (if any), change of frequency and band (modulation format) upon receipt of the various first signal pulses in the first second, ie in Initial Phase, are set out below in Table 8:

Table 8

| 1st Pulse Received (ms) | Pulse Register Status | Priority Points | |
|---|---|---|---|
| | | Character Points | Register Points |
| 800 | Set 800ms Register | 0.8 | 1 |
| 500 | Set 500ms Register | 0.5 | 1 |
| 200 | Set Short-Pulse Register | 0.2 | 2 |
| 100 | Set Short-Pulse Register | 0.1 | 2 |

As mentioned in 3.2.2 above, all Priority Points will be reset to zero upon band switching. Therefore, no Priority Points will be carried forward to the Continuous Phase as Accumulated Characteristics, ie Priority Points accumulated, immediately after the Initial Phase if the first signal received was 800ms or 500ms as these signals would set the respective 800ms and 500ms Registers.

However, if the 1 st signal received was 200ms or 100ms, only the Short-pulse Register will be set to 1. However, in view of its low priority, no band switching would take place. Therefore, the Priority Points of 2.2 collected during the Initial Phase as shown in the above table will be carried forward to the Continuous Phase contributing to the Accumulation Characteristics, namely Priority Points.

### 3.4.2 During the Continuous Phase

The Priority Points collected during the 1st second are brought forward to the Priority Points in the Continuous Phase as Accumulated Characteristics. Some examples showing the change of Pulse Register (if any), change of frequency and band (modulation format) upon receipt of the 2nd signal pulse after a band is selected by the system, ie in the Continuous Phase, are set out in Table 9 below:

Table 9

| Pulse Register Status after 1st Pulse | 2nd Pulse Received (ms) | Pulse Register Status after 2nd Pulse | Priority Points: Accumulated + Instant Char (Char + Register) | | |
|---|---|---|---|---|---|
| 800ms | 800 | remain at 800 | 0* | 0.8 | 1 |
| - " - | 500 | remain at 800 | 0 | 0.5 | 0 |
| 500ms | 500 | remain at 500 | 0 | 0.5 | 1 |
| - " - | 800 | set 800 | 0 | 0.8 | 1 |
| Short-pulse 200 ms | 800 | set 800 | 2.2 | 0.8 | 1 |
| - " - | 500 | set 500 | 2.2 | 0.5 | 1 |

(continued)

| Pulse Register Status after 1st Pulse | 2nd Pulse Received (ms) | Pulse Register Status after 2nd Pulse | Priority Points: Accumulated + Instant Char (Char + Register) | | |
|---|---|---|---|---|---|
| Short-pulse 100 ms | 200 | remain at 200 | 2.1 | 0.2 | 0 |
| - " - | 100 | remain at 200 | 2.1 | 0.1 | 0 |
| *NB: When two consecutive 800ms pulses are received marking the Start and End Bits, the system will by default add back the 1.8 Priority Points from the 1 st 800ms pulse received making total Priority Points of 3.6 (1.8 from 1st pulse and 1.8 from 2nd pulse). | | | | | |

As can be seen above, Priority Points will only be accumulated to form Accumulated Characteristics in cases where the signals received are not strong enough to set the 800ms or 500ms Register.

The setting of new Pulse Register (except for Short-pulse Register) would mean band switching according to 3.2.2 and optionally the preparation stage of decoding.

It can also be observed that the system may switch band according to a combination of both the Instant and Accumulative Characteristics of each incoming signal in order to find a correct band for the signals received.

3.5 Band / Frequency Switching

3.5.1 During Initial Phase

When the pulse received is a first pulse, the priority of band switching will be dominated by the instant characteristic of that very first pulse. Assuming that the default frequency is 77.5 kHz, the priority points at this phase as well as their tendency of band switching are given in Table 10 below:

Table 10

| 1st Pulse Received (ms) | Pulse Register Status | Priority Point: Character + Register | | Change Band (Modulation Format) to | Change of Frequency to (kHz) |
|---|---|---|---|---|---|
| 800 | Set 800ms Register | 0.8 | 1 | WWVB, JJY | 40 and 60 alternating in every 15 sec |
| 500 | Set 500ms Register | 0.5 | 1 | MSF | 60 |
| 200 | Set Short-pulse Register | 0.2 | 2 | - | - |
| 100 | Set Short-pulse Register | 0.1 | 2 | - | - |

3.5.2 During Continuous Phase

In other cases from the 2nd or subsequent pulse onwards, the band will switch as illustrated in the following manner. In fact, there are two situations where the band will be changed during Continuous Phase:

a) Switching from a low priority band to a higher priority band (three situations set out in Table 11 below). In this case, the band switches and locks immediately as soon as a Pulse Register is set regardless of the Accumulative Characteristic values, ie Priority Points. Optional preparation stage of decoding may start. For the setting of the 800ms Register, preparation for decoding of both WWVB and JJY will occur simultaneously. The method for distinguishing the two bands is by phase detection which will be discussed below.

Table 11

| Pulse Register Status after 1st Pulse | 2nd Pulse Received (ms) | Pulse Register Status after 2nd Pulse | Priority Point Character + Register | | Change Band (Modulation Format) to | Change of Frequency to (kHz) |
|---|---|---|---|---|---|---|
| Short-Pulse | 500ms | Set 500 ms Register | 0.5 | 1 | MSF | 60 |
| -"- | 800ms | Set 800 ms Register | 0.8 | 1 | WWVB, JJY | 40 and 60 alternating in every 15 sec |
| 500ms | 800ms | Set 800 ms Register | 0.8 | 1 | WWVB, JJY | - |

b) Switching from a high priority band to a lower priority band (Three situations set out in Table 12 below) In order to reset Pulse Register of a higher priority, the Priority Points based on the Accumulative Character Register value must be ≥ 3.0 in order to change or lock a band.

Table 12

| Pulse Register Status after 1st Pulse | Further Pulses Received (ms) | Pulse Register Status after Nth Pulses | Priority Point based on Accumulative Character Register Value | Change Band (Modulation Format) to | Change of Frequency to (kHz) |
|---|---|---|---|---|---|
| 500ms | 100ms or 200ms pulses | Reset 500ms Register | 3.0 | DCF and MSF | - |
| 800ms | 500ms, 200ms & 100ms pulses | Set 500ms Register AND Reset 800ms Register | 3.0 | MSF | - |
| -"- | 100ms & 200ms pulses | Reset 800ms Register | 3.0 | DCF and MSF | - |

Optional preparation stage of decoding may then start. For the resetting of the 800ms or 500ms Register, preparation of decoding both DCF and MSF will occur simultaneously. The method of differentiating the two formats will be discussed in Section 4 below.

Example

Assuming that the first pulse received is a 500ms pulse. According to table 10, the 500ms pulse register will set itself to 1, a priority point of 1.5 will be given and the band is locked at MSF immediately. As soon as the system is locked, the priority points will be initialized to 0. The 500ms Pulse Register value, however, will remain at 1. Preparation stage of decoding the band MSF may start immediately.

Let's say the second pulse received is a 800ms signal. In this case, the 800ms Pulse Register will be set to 1 and the band therefore switches to and locks at WWVB/JJY immediately. The 500ms Pulse Register will not be reset and information of the presence of a 500ms signal previously received will remain in the system. Preparation stage of decoding the bands WWVB and JJY may start immediately and simultaneously.

For the purpose of illustration, we shall assume that the following incoming signals comprise 100ms and 200ms pulses. Since these signals alone are of a lower priority than the 800ms Pulse Register, the band will stay at WWVB/JJY. The system will accumulate the Priority Points of each signal as Accumulated Characteristics.

The system will wait until the accumulated Priority Points reach 3.0, say, with ten 200ms pulses and ten 100ms pulses. The band will then be locked at MSF and DCF. Preparation stage of decoding the bands MSF and DCF may start immediately and simultaneously.

3.6 Phase Detection (to distinguish WWVB and JJY)

As illustrated in Fig 23, the duration of either a projection in a positive phase (shown by a dashed line in Fig 23) or a projection in a negative phase (shown by a dot-dash line in Fig 23) must be equal to 1000 ms for an RCC signal. In the Positive Phase Register, 1 Point will be given to EACH complete 1000ms positive phase pulse received whereas in the Negative Phase Register, 1 Point will be given to EACH complete 1000ms of negative phase pulse received.

If the duration of a positive or negative projection line, as the case may be, is NOT equal to 1000ms, the instant data will still be stored in the system but no point will be given to the Positive or Negative Phase Register.

The total values of the Positive and Negative Phase Registers will then be compared. By default, in order to determine the phase of a plurality of RCC signals received, the difference in value between the Positive Phase and Negative Phase Register must be equal to or larger than 3. This is an optimal value with reliable accuracy obtained as a result of experiments. If the difference is smaller than 3, the system will continue with the processing of phase detection until a desired value is obtained.

According to the phase detection diagram in Fig 23, the number of negative phases equals to 5 whereas there is only 1 positive phase present. Since the value of the Negative Phase Register exceeds that of the Positive Phase Register by 4, the signals received can be determined to be in negative phase.

Practically, it will take 10 to 16 seconds to distinguish the phase difference with a near 100% accuracy.

4. Decoding RCC Signals

This step comprises two stages, namely:-

    1. Preparation Stage for Decoding; and
    2. Actual Decoding.

4.1 Preparation Stage for Decoding

The preparation stage is optional and the user can choose to enable or disable this function by a manual switch.

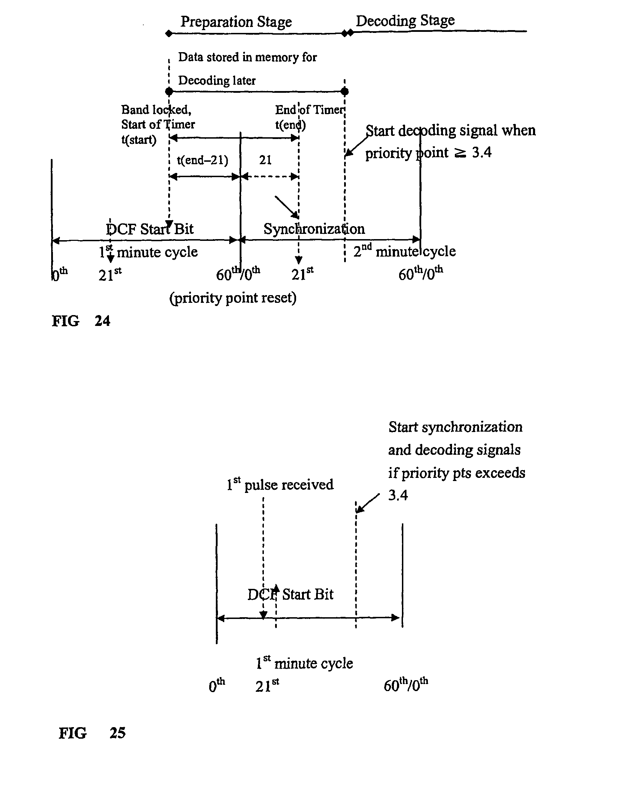

The preparation stage will start as soon as a band is locked. At that point (which is illustrated by t(start) in Fig 24), all the Priority Points previously accumulated will be reset to 0. All the data of the incoming signals received upon t(start) will be stored in the memory preparing for decoding and a timer will start to count the duration of this preparation stage.

When the time proceeds to the end of the 1 st minute, ie the End bit, all the Priority Points accumulated since t(start) will once again be reset to 0. Priority Point will be accumulated from the 1 st bit of the 2nd minute.

When the Start Bit (also the 1st bit in most cases except for DCF) is received, the system will synchronize the automatic scanner with the universal table in the decoder. However, decoding of signals cannot start until the Priority Points accumulated from all the signals received from the Start Bit of the 2nd minute reach 3.4. Otherwise, the system will continue to receive and store the incoming signals and wait until the 3.4 criteria is met with.

Recalling Table 9 in Section 3.4.2, both DCF and MSF will be locked when the Priority Points have reached 3.0 and both 500ms Pulse Register and 800ms Pulse Register reset to 0. In this situation, the system will store the data and prepare for decoding with either one of the formats. The two formats can be differentiated as soon as the Start Bit is reached and decoding can start subject to the conditions given above.

4.2 Stage of Actual Decoding

Decoding will not be initiated until (1) a band is locked; (2) the Priority Point of the received signals exceeds 3.4; and (3) the Start Bit of the locked band is present. This is illustrated in Fig 25.

Generally, decoding can start as soon as the Start Bit appears and the priority points collected from previously received signals have exceeded 3.4. In practice, however, decoding an MSF signal additionally requires at least ten 100ms pulses (Reserved Bits) after the Start Bit for the sake of certainty. Likewise, the system will check that there are at least ten 100ms pulses (Reserved Bits) before the Start Bit in order to confirm a DCF band.

As soon as the above requirements are met with, the decoding stage will start. Firstly, the data of the stored signals, say 20 signals, of the previous minute, will all be decoded instantly. Since the automatic scanner has already synchronized with the decoder, the decoder will now be able to decode the forthcoming signals on a bit-by-bit basis.

Since 20 signals have already been decoded in this case, only the forthcoming 40 signals will need to be decoded one by one in order to make up a complete 1- minute time information. The present invention will therefore be able to give the time information in a shorter time than conventional methods.

The details of the RCC signal decoder by using a universal table have been given above.

**Claims**

1.  A synchronisation circuit for synchronising time with a received radio controlled clock signal, the synchronisation circuit comprising a receiver for receiving a RF signal having a bandwidth including transmission frequencies of a plurality of modulation formats, and wherein the plurality of modulation formats includes at least two formats which have different transmission frequencies; the receiver comprising:

    an input (100) connected to an aerial for receiving the RF signal; and
    an analog-to-digital converter (110) for sampling the RF signal for a predetermined period of time to generate input data; and
    a processor (120) operative to:

    a) analyse at least one characteristic of the sampled input data to generate characteristic data (S30);
    b) compare the characteristic data with information representing each of the plurality of modulation formats to identify a most probable modulation format from the plurality of modulation formats (S50);
    c) output data representing the most probable modulation format (S60);

    wherein if in step (b) a single most probable modulation format cannot be identified, the processor is adapted to repeat steps a) to b) in sequence with input data generated for subsequent periods of time until a single most probable modulation format is identified; wherein during said repetition of steps the processor is adapted to keep an accumulation of the characteristic data and use them for identifying of the most probable modulation format.

2.  A synchronisation circuit according to claim 1, wherein in step a) the processor (120) is adapted to analyse the at least one characteristic out of:

    instantaneous amplitude or phase of the input data;
    average amplitude or phase of the input data;
    length of time for which the input data remains constant within a predetermined percentage range of a predetermined amplitude;
    variation of the input data over a time interval, including derivatives of the amplitude and phase of the input data;
    details of any turning points in the input data;
    a delay between received pulses;
    a value of the current; and
    a value of the impedance.

3.  A clock for synchronising time with a received radio controlled clock signal, including a synchronisation circuit as claimed in any of claims 1 and 2.

**Patentansprüche**

1.  Synchronisierungsschaltung zur Zeitsynchronisierung mit einem empfangenen funkgesteuerten Taktsignal, wobei die Synchronisierungsschaltung einen Empfänger zum Empfangen eines Hochfrequenz- (HF-) Signals aufweist, das eine Bandbreite einschließlich Übertragungsfrequenzen einer Mehrzahl von Modulationsformaten aufweist, und wobei die Mehrzahl von Modulationsformaten mindestens zwei Formate umfasst, die unterschiedliche Übertragungsfrequenzen ausweisen;
    wobei der Empfänger umfasst:

    - einen mit einer Antenne verbundenen Eingang (100) zum Empfangen des HF-Signals; und
    - einen Analog-Digital-Wandler (110) zum Abtasten des HF-Signals für eine vorbestimmte Zeitdauer, um Eingabedaten zu erzeugen; und
    - einen Prozessor (120) der betreibbar ist, um:

    a) mindestens eine Kenngröße der abgetasteten Eingabedaten zu analysieren, um Kenngrößendaten (S30) zu erzeugen;
    b) die Kenngrößendaten mit Daten zu vergleichen, die jeweils die Mehrzahl von Modulationsformaten darstellen, um ein wahrscheinlichstes Modulationsformat aus der Mehrzahl von Modulationsformaten zu identifizieren (S50);

c) Daten auszugeben, die das wahrscheinlichste Modulationsformat darstellen (S60);

wobei, wenn in Schritt b) ein einzelnes wahrscheinlichstes Modulationsformat nicht identifiziert werden kann, der Prozessor geeignet ist, die Schritte a) bis b) in der Reihenfolge mit Eingabedaten zu wiederholen, die für nachfolgende Zeitdauern erzeugt wurden, bis ein einzelnes wahrscheinlichstes Modulationsformat identifiziert ist; wobei während der Wiederholung der Schritte der Prozessor geeignet ist, eine Anhäufung der Kenngrößendaten zu behalten und sie zur Identifizierung des wahrscheinüchsten Modulationsformats zu verwenden.

2. Synchronisierungsschaltung nach Anspruch 1, wobei in Schritt a) der Prozessor (120) geeignet ist, die mindestens eine Kenngröße aus folgenden zu analysieren:

- momentane Amplitude oder Phase der Eingabedaten;
- durchschnittlische Amplitude oder Phase der Eingabedaten;
- Zeitdauer, für die die Eingabedaten innerhalb eines vorbestimmten Prozentbereichs einer vorbestimmten Amplitude konstant bleiben;
- Abweichung der Eingabedaten über ein Zeitintervall einschüeßlich der Ableitungen der Amplitude und der Phase der Eingabedaten;
- Details jeglicher Wendepunkte in den Eingabedaten;
- eine Verzögerung zwischen empfangenen Impulsen;
- einen Wert des Stroms; und
- einen Wert der Impedanz.

3. Uhr zur Zeitsynchronisation mit einem empfangenen funkgesteuerten Taktsignal einschüeßlich einer Synchronisierungsschaltung wie in einem der Ansprüche 1 und 2 beansprucht.

**Revendications**

1. Circuit de synchronisation destiné à synchroniser le temps avec un signal d'horloge radiocommandé reçu, le circuit de synchronisation comprenant un récepteur pour recevoir un signal RF ayant une largeur de bande comprenant des fréquences de transmission d'une pluralité de formats de modulation et dans lequel la pluralité de formats de modulation comprend au moins deux formats qui ont différentes fréquences de transmission ; le récepteur comprenant :

une entrée (100) reliée à une antenne destinée à recevoir le signal RF ; et
un convertisseur analogique-numérique (110) pour échantillonner le signal RF pendant une période de temps prédéterminée afin de générer des données d'entrée ; et
un processeur (120) exploité pour :

a) analyser au moins une caractéristique des données d'entrée échantillonnées pour générer des données caractéristiques (530) ;
b) comparer les données caractéristiques à des informations représentant chacun de la pluralité de formats de modulation pour identifier un format de modulation le plus probable dans la pluralité de formats de modulation (550) ;
c) délivrer des données représentant le format de modulation le plus probable (560) ;

dans lequel, si, à l'étape (b), un seul format de modulation le plus probable ne peut être identifié, le processeur est adapté pour répéter les étapes a) à b), l'une après l'autre, avec des données d'entrée générées sur des périodes ultérieures de temps jusqu'à ce qu'un seul format de modulation le plus probable soit identifié ; dans lequel, au cours de ladite répétition des étapes, le processeur est adapté pour conserver une accumulation des données caractéristiques et les utiliser pour l'identification du format de modulation le plus probable.

2. Circuit de synchronisation selon la revendication 1, dans lequel le processeur (120) est adapté à l'étape a) pour analyser au moins l'une des caractéristiques suivantes :

une amplitude ou une phase instantanée des données d'entrée ;
une amplitude ou une phase moyenne des données d'entrée ;
une période de temps, pendant laquelle les données d'entrée restent constantes dans une plage prédéterminée de pourcentages d'une amplitude prédéterminée ;

une variation des données d'entrée sur un intervalle de temps, notamment des dérivées de l'amplitude et de la phase des données d'entrée ;

des détails de points d'inflexion quelconques dans les données d'entrée ;

un retard entre les impulsions reçues ;

une valeur du courant ; et

une valeur de l'impédance.

3. Horloge pour synchroniser le temps avec un signal d'horloge radiocommandé reçu, notamment un circuit de synchronisation selon l'une quelconque des revendications 1 ou 2.

FIG   1

DCF TIME CODE FORMAT   (77.5kHz)

**Time frame 1 minute**
**(Index count 1 second)**

0        5        10        15        20        25        30        35        40        45        50        55        0

M | | | | | | | | | | | | | R A1 Z1 Z2 A2 S 1 2 4 8 10 20 40 P1 1 2 4 8 10 20 P2 1 2 4 8 10 20 1 2 4 1 2 4 8 10 1 2 4 8 10 20 40 80 P3

coding when required ⊢——————⊣ minutes ⊢—————⊣ hours ⊢————⊣ calendar day ⊢ day of the week ⊢ month ⊢ year

EP 1 787 444 B1

FIG 2

JJY TIME CODE FORMAT  (40kHz & 60kHz)

**Time frame 1 minute**
**(Index count 1 second)**

minutes

hours

days

year

Leap second

EP 1 787 444 B1

FIG 3

MSF TIME CODE FORMAT (60kHz)

Time frame 1 minute
(Index count 1 second)

Switch over to the next time frame

year

month

day of the month

day of the week

hour

minute

minute
identifier BST
hour + minute
day of the week
day + month
year
BST/GMT change impending

Parity check bits

# FIG 4

WWVB TIME CODE FORMAT (60kHz)

**Time frame 1 minute (Index count 1 second)**

minutes — hours — days — UTI sign — UTI correction (ms) — year — daylight saving time bits — leap second warning bit — leap year indicator bit "0" = non leap year "1" = leap year

EP 1 787 444 B1

FIG 5

FIG 6

**FIG 7**

FIG 8

FIG 9 PARALLEL CRYSTAL FILTER (1)

CRYSTAL OSCILLATOR

F4 – frequency 4

F3 – frequency 3

F2 – frequency 2

F1 – frequency 1

INPUT

OUTPUT

FIG 10  SERIAL CRYSTAL FILTER (2)

CRYSTAL OSCILLATOR

| | | | |
|---|---|---|---|
| F1 | F2 | F3 | F4 |
| FREQ 1 | FREQ 2 | FREQ 3 | FREQ 4 |

INPUT

OUTPUT

**FIG 11    PHASE LOCK LOOP - CRYSTAL FILTER (3)**

PHASE LOCK LOOP

| MAIN FREQUENCY | MAIN FREQUENCY / N | MAIN FREQUENCY / X | MAIN FREQUENCY / Y |
|---|---|---|---|

F1– FREQ 1 OUTPUT          F2–FREQ 2 OUTPUT          F3 – FREQ 3 OUTPUT          F4 – FREQ 4 OUTPUT

$F2 = F1 / N$

$F3 = F1 / X$

$F4 = F1 / Y$

**FIG 12**

UNIVERSAL STANDARD DEMODULATOR DECODER

EP 1 787 444 B1

FIG 13    SINGLE CRYSTAL FILTER SCHEMATIC DIAGRAM

S507
(FIG 1 OR FIG2 )

C₀ – SHUNT CAPACITOR   S501

S506
( FIG1 OR FIG2 )

ANTENNA S504
INDUCTOR - L

R        L        C

CRYSTAL OSCILLATOR S502

Antenna Capacitor S505

C$_{VAR}$

C$_C$ – COMPENSATION CAPACITOR   S503

37

**FIG 14    Normal Output Waveform**

VOLTAGE

PULSE WIDTH

TIME

Compensation Capacitor $(C_C)$ = Shunt Capacitor $(C_0)$ + Crystal Capacitor

**FIG 15    Erroneous Output Waveform**

VOLTAGE

PULSE WIDTH

TIME

Compensation Capacitor $(C_C) \neq$ Shunt Capacitor $(C_0)$ + Crystal Capacitor

FIG 16   ANTENNA & VARIABLE CAPACITOR

ANTENNA
(INDUCTOR)

VARIABLE CAPACITOR
$C_{VAR}$

FIG 17    S405 – INSTANT PARALLEL INPUT SIGNAL

SIGNAL

F1 = CHANNEL 1
(AM)                                              RCC SINGAL

F2 = CHANNEL 2
(AM)                                              RCC SIGNAL

F3 = CHANNEL 3
(AM)                                              RCC SINGAL

F4 = CHANNEL 4
(AM)                                              RCC SIGNAL

F1 = CHANNEL 1
(FM )                                             NOISE

F2 = CHANNEL 2
(CW)                                              HEART RATE

INSTANT TIME (t)                                  TIME

FIG 18. CHARACTERISTIC OF HEART RATE AND ITS TREND

## FIG 19   CHARACTERISTICS OF RCC SIGNAL AND ITS TREND

EP 1 787 444 B1

## FIG 20 CONTINUOUS CHARACTERISTICS OF SIGNAL AND ITS TREND

LEVEL (VOLTAGE, CURRENT, IMPENDANCE, POWER, PHASE, GRAPHIC)

1 second

| 1<sup>st</sup> bit | 2<sup>nd</sup> bit | | | 20<sup>th</sup> bit | | | 60<sup>th</sup> bit |

0　　1　2　3　　　　　19　20　　　　　58　59　60 / 0

**FIG　26**

Rising Edge

Falling Edge

B

C

A

D

A'

D'

**FIG　21**

Rising Edge          Falling Edge

B   $P_{C1}$ $P_{C2}$   $P_{C3}$   $P_{C4}$   C      B'        C'

$P_{D1}$   $P_{D2}$ $P_{D3}$   $P_{D4}$   $P_{A1}$ $P_{A2}$ $P_{A3}$ $P_{A4}$ $P_{D'1}$ $P_{D'2}$ $P_{D'3}$ $P_{D'4}$

A          D        A'        D'

**FIG   22**

Phase Detection Diagram

| 1st pulse | 2nd pulse | 3rd pulse | 4th pulse | 5th pulse | 6th pulse |
|---|---|---|---|---|---|
| 800ms | 800ms | 500ms | 200ms | 500ms | 200ms |

B     C   B1    C1   B2    C2    B3 C3    B4    C4    B5     C5

A     D A1    D1 A2    D2    A3 D3   A4    D4      A5 D5

-ve phase duration
(-ve Phase Register Points)

1000 ms (+1) | 1000 ms (+1) | 1000 ms (+1) | 1000 ms (+1) | 1000 ms (+1)

+ve phase duration
(+ve Phase Register Points)

1000ms (+1) | 1300ms (+0) | 1300ms (+0) | 700ms (+0) | 1300ms (+0)

⟶ Positive phase projection
⟶ Negative phase projection

**FIG   23**

EP 1 787 444 B1

Preparation Stage | Decoding Stage

Data stored in memory for
Decoding later

Band locked,
Start of Timer
t(start)

End of Timer
t(end)

Start decoding signal when
priority point ≥ 3.4

t(end−21) | 21

DCF Start Bit | Synchronization

1$^{st}$ minute cycle | 2$^{nd}$ minute cycle

0$^{th}$ 21$^{st}$ 60$^{th}$/0$^{th}$ 21$^{st}$ 60$^{th}$/0$^{th}$

(priority point reset)

**FIG 24**

Start synchronization
and decoding signals
if priority pts exceeds
3.4

1$^{st}$ pulse received

DCF Start Bit

1$^{st}$ minute cycle

0$^{th}$ 21$^{st}$ 60$^{th}$/0$^{th}$

**FIG 25**

46

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1426839 A1